(19) **Europäisches Patentamt**
**European Patent Office**
**Office européen des brevets**

(11) **EP 4 405 744 B1**

(12) **EUROPÄISCHE PATENTSCHRIFT**

(45) Veröffentlichungstag und Bekanntmachung des Hinweises auf die Patenterteilung:
**05.11.2025   Patentblatt 2025/45**

(21) Anmeldenummer: **22790506.4**

(22) Anmeldetag: **22.09.2022**

(51) Internationale Patentklassifikation (IPC):
**G02F 1/35** (2006.01)

(52) Gemeinsame Patentklassifikation (CPC):
**G02F 1/353; G02F 1/3507; G02F 1/3534; G02F 1/3542**

(86) Internationale Anmeldenummer:
**PCT/EP2022/076420**

(87) Internationale Veröffentlichungsnummer:
**WO 2023/046854 (30.03.2023 Gazette 2023/13)**

(54) **VORRICHTUNG UND VERFAHREN ZUR FREQUENZKONVERSION ELEKTROMAGNETISCHER STRAHLUNG**

DEVICE AND METHOD FOR FREQUENCY CONVERSION OF ELECTROMAGNETIC RADIATION

DISPOSITIF ET PROCÉDÉ DE CONVERSION DE FRÉQUENCE D'UN RAYONNEMENT ÉLECTROMAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2021   DE 102021210706**

(43) Veröffentlichungstag der Anmeldung:
**31.07.2024   Patentblatt 2024/31**

(73) Patentinhaber: **Fraunhofer-Gesellschaft zur Förderung der angewandten Forschung e.V.**
**80686 München (DE)**

(72) Erfinder:
• **JUNGBLUTH, Bernd**
**52074 Aachen (DE)**

• **ELSEN, Florian**
**52074 Aachen (DE)**
• **NYGA, Sebastian**
**52074 Aachen (DE)**
• **GEUS, Jan Fabian**
**52074 Aachen (DE)**

(74) Vertreter: **Zimmermann, Tankred Klaus et al Schoppe, Zimmermann, Stöckeler Zinkler, Schenk & Partner mbB Patentanwälte Radlkoferstrasse 2 81373 München (DE)**

(56) Entgegenhaltungen:
**WO-A1-2014/151887      WO-A1-2016/054589**
**WO-A1-2021/105094      DE-A1- 102019 131 827**
**US-A- 5 321 718**

**Beschreibung**

Ausführungsbeispiele der vorliegenden Erfindung betreffen eine Vorrichtung zur Frequenzkonversion elektromagnetischer Strahlung, insbesondere einen Frequenzkonverter für die Konversion von Einzelphotonen, insbesondere einen Quantenfrequenzkonverter. Weitere Ausführungsbeispiele betreffen ein Verfahren zur Frequenzkonversion elektromagnetischer Strahlung.

Gegenstand aktueller Forschung ist die Implementierung von Netzwerken zwischen Quantencomputern. Da die Fluoreszenzwellenlängen der Quantenbits (Qubits, die Recheneinheiten eines Quantencomputers) üblicherweise nicht im Bereich der Telekommunikationswellenlängen (1260 nm - 1675 nm) liegen, ist ein Konversionsschritt notwendig, um Propagationsverluste bei der Übertragung durch Glasfasern zu verringern [1].

Bei der Frequenzkonversion dieser optischen Signale ergeben sich spezielle Anforderungen an einen Frequenzkonverter, die bei der klassischen Frequenzkonversion nicht von Relevanz sind. Im Gegensatz zu klassischer optischer Kommunikation ist die zu transportierende Information in einzelnen Photonen und nicht in Feldern makroskopischer Intensität kodiert. Daher wird die Fidelität bei der Übertragung durch jedes zusätzlich (d.h. aus einer anderen Quelle) eingebrachte Photon gleicher Wellenlänge reduziert. Diese Photonen werden Rauschphotonen genannt.

Die Rate eingebrachter Rauschphotonen sollte daher an jeder Stelle des Übertragungsweges gering ausfallen. Dies gilt insbesondere für den Konversionsprozess, der zum Beispiel durch die Überlagerung der zu konvertierenden Photonen mit einem weiteren Feld in einem nichtlinearen Medium realisiert werden kann.

In bisherigen Frequenzkonvertern findet der Konversionsprozess in Wellenleiterstrukturen in periodisch gepolten nichtlinearen Medien statt, z.B. in Lithium-Niobat [2], [3], [4], [5] oder in Kaliumtitanylphosphat [6]. Dabei ist neben dem zu konvertierenden Strahlungsfeld ("Inputsignal, -feld" mit der Wellenlänge $\lambda_{in}$) ein weiteres Feld hoher mittlerer Leistung inzident, wodurch optisch-optische Konversionseffizienzen in der Größenordnung der Quanteneffizienz ($n_Q = \lambda_{out}/\lambda_{in}$) erreicht werden. Hierbei bezeichnet $\lambda_{out}$ die Wellenlänge des konvertierten Feldes ("Outputsignal, -feld").

Die Anwesenheit eines leistungsstarken Feldes in einem nichtlinearen Medium bewirkt jedoch, dass Photonen in allen Spektralbereichen längerer Wellenlängen und daher auch im Ausgangskanal erzeugt werden, insbesondere aufgrund eines Prozesses, welcher als *"spontaneous parametric down-conversion"* (SPDC) bezeichnet wird.

Die Rate erzeugter Rauschphotonen beträgt daher bei den existierenden Systemen mindestens 150 Hz/pm, z.B. bezogen auf die Halbwertsbreite der spektralen Filter des optischen Ausgangs.

In Anbetracht des Stands der Technik wäre ein Konzept zur Frequenzkonversion wünschenswert, welches ein verbessertes Verhältnis zwischen einer hohen Konversionseffizienz und einer niedrigen Rate von Rauschphotonen bietet. Insbesondere wäre es wünschenswert, dass das Konzept eine niedrige Effizienz des SPDC-Prozesses in der Erzeugung von Photonen der Ausgangswellenlänge aufweist und dennoch eine Konversionseffizienz in der Größenordnung der Quanteneffizienz bietet.

DE 10 2019 131827 A1 offenbart alle Merkmale des Oberbegriffes des Anspruchs 1.

Die vorliegende Erfindung basiert auf der Erkenntnis, dass eine effiziente und rauscharme Frequenzkonversion durch eine Überlagerung einer elektromagnetischen Eingangsstrahlung mit einer elektromagnetischen Treiberstrahlung entlang eines Propagationspfads in einem nichtlinearen Medium erreicht werden kann, indem auf Wellenleitung der Treiberstrahlung in dem nichtlinearen Medium verzichtet wird und außerdem die Wellenlänge der Treiberstrahlung größer als die Wellenlänge der Eingangsstrahlung gewählt ist. Ungenauigkeiten bei der Fertigung eines Wellenleiters stellen eine wesentliche Quelle von Rauschphotonen in herkömmlichen Frequenzkonvertern dar. Bislang wurde allerdings davon ausgegangen, dass eine Implementierung ohne Wellenleitung hinsichtlich höherer erforderlicher Leistungsdichten der Treiberstrahlung nachteilig ist, da durch Wechselwirkung einer leistungsstarken Treiberstrahlung mit dem nichtlinearen Medium eine hohe Rate von Rauschphotonen entstehen kann. Dahingegen haben die Erfinder erkannt, dass durch eine größere Wellenlänge der Treiberstrahlung gegenüber der Wellenlänge der Eingangsstrahlung von der Treiberstrahlung erzeugte Phononen-Banden weniger stark oder nicht in den Wellenlängenbereich der Ausgangsstrahlung fallen, und somit eine rauscharme Konversion möglich ist. Obwohl in einem Konversionsprozess welcher auf Drei-Wellenmischung basiert, bei einer Wahl der Wellenlänge der Treiberstrahlung als kürzeste Wellenlänge mit einer höheren Konversionseffizienz zu rechnen wäre, wurde erkannt, dass es hinsichtlich der gegensätzliche Ziele einer hohen Konversionseffizienz und einer niedrigen Rate von Rauschphotonen vorteilhaft ist, die Konversion basierend auf einer Treiberstrahlung mit einer Wellenlänge größer als die Wellenlänge der Eingangsstrahlung zu betreiben, und dass dies sogar eine Leistungsdichte der Treiberstrahlung ermöglicht, mit welcher ohne Wellenleitung eine hohe Konversionseffizienz erreicht werden kann. Ausführungsbeispiele ermöglichen also eine rauscharme und effiziente Konversion von Photon, wodurch ein gutes Signal-Rausch Verhältnis ermöglicht wird.

Ausführungsbeispiele der vorliegenden Erfindung schaffen eine Vorrichtung zur Frequenzkonversion elektromagnetischer Strahlung, beispielsweise eine Vorrichtung zur Frequenzkonversion von Einzelphotonen, insbesondere zur quanteninformationserhaltenden Frequenzkonversion von Einzelphotonen. Die Vorrichtung weist ein nichtlineares Medium auf. Die Vorrichtung ist ausgebildet, um eine elektromagnetische Eingangsstrahlung mit einer ersten Wellenlänge in dem nichtlinearen Medium mit einer elektromagnetischen Treiberstrahlung einer zweiten Wellenlänge entlang eines Propagationspfads zu überlagern, um eine elektromagnetische Ausgangsstrahlung mit einer dritten Wellenlänge zu erzeugen. Zum Beispiel ist die Vorrichtung ausgebildet, um die Treiberstrahlung und die Eingangsstrahlung entlang des Propagationspfads kollinear zu überlagern oder zu mischen. Erfindungsgemäß ist die zweite Wellenlänge größer als die erste Wellenlänge. Ferner ist das nichtlineare Medium für eine freie Propagation der Treiberstrahlung in dem nichtlinearen Medium, oder durch das nichtlineare Medium, ausgebildet. Das heißt beispielsweise, das nichtlineare Medium (oder die Vorrichtung) weist keine wellenleitenden Eigenschaften, oder wellenleitende Struktur, für die Propagation der Treiberstrahlung entlang des Propagationspfads auf, z.B. Eigenschaften, welche die Treiberstrahlung, welche entlang des Propagationspfads propagiert, räumlich begrenzen. Die Vorrichtung kann also für eine Propagation der Treiberstrahlung ohne Wellenleitung in dem nichtlinearen Medium ausgebildet sein.

Gemäß Ausführungsbeispielen weist die Vorrichtung ferner einen für die zweite Wellenlänge resonanten Resonator auf. Der Propagationspfad des nichtlinearen Mediums, das heißt, der Propagationspfad in dem nichtlinearen Medium, entlang welchem die Treiberstrahlung und die Eingangsstrahlung überlagert werden, ist in dem Resonator angeordnet, um die Treiberstrahlung entlang des Propagationspfads bereitzustellen. Beispielsweise ist der Propagationspfad in einem optischen Pfad des Resonators angeordnet. Die Verwendung eines Resonators stellt eine energieeffiziente Möglichkeit dar, um in dem nichtlinearen Medium eine hohe Leistungsdichte der Treiberstrahlung bereitzustellen. Eine hohe Intensität der Treiberstrahlung gewährleistet eine hohe Konversionseffizienz eines nichtlinearen Konversionsprozesses zweiter Ordnung, insbesondere einer Drei-Wellenmischung zwischen Photonen der Eingangsstrahlung, der Treiberstrahlung und der Ausgangsstrahlung. Die Verwendung eines Resonators ermöglicht es, die Treiberstrahlung sowohl mit einer hohen Leistung als auch mit einer hohen Strahlqualität und einer schmalen spektralen Bandbreite bereitzustellen. Insbesondere kann dies mittels des Resonators kosteneffizient erreicht werden.

Gemäß Ausführungsbeispielen ist die zweite Wellenlänge kleiner als die dritte Wellenlänge. Die zweite Wellenlänge kann gemäß diesen Ausführungsbeispielen also die mittlere Wellenlänge in einer Drei-Wellenmischung sein. Für diese Fälle des Verhältnisses der drei Wellenlängen ist die erfindungsgemäße Implementierung der Frequenzkonversion mit freier Propagation in dem nichtlinearen Medium besonders vorteilhaft, da dadurch eine geringe Rate an Rauschphotonen erreicht werden kann, obwohl die Wellenlänge der Treiberstrahlung kürzer ist als die Wellenlänge der Ausgangsstrahlung.

Gemäß Ausführungsbeispielen ist die Vorrichtung ausgebildet, um die Treiberstrahlung in dem nichtlinearen Medium auf einen Fokus mit einer Querschnittsgröße von $2*w_0$ zu fokussieren. Zum Beispiel ist die Querschnittsgröße eine maximale Größe eines Strahlquerschnitts im Fokus, z.B. ist $w_0$ der Radius des Fokus im Fall eines kreisförmigen Strahlquerschnitts. Gemäß diesen Ausführungsbeispielen erfüllt eine Länge L des nichtlinearen Mediums entlang des Propagationspfads die Bedingung

$$L \leq z_R * \sqrt{\frac{1}{3}\left(\frac{D}{w_0}\right)^2 - 4} \;,$$

wobei $z_R$ die Rayleigh-Länge für die Treiberstrahlung bezeichnet, und wobei D eine Größe einer Apertur des nichtlinearen Mediums bezeichnet, beispielsweise eine Größe in der Raumrichtung, in welcher $w_0$ gemessen ist. Die Apertur kann beispielsweise einen Querschnitt oder einen Durchmesser einer freien Fläche einer Eintrittsfacette, durch welche der Propagationspfad verläuft, oder durch welche die Treiberstrahlung und die Eingangsstrahlung in das nichtlineare Medium eintreten, bezeichnen. Zum Beispiel kann D den kleinsten freien Durchmesser der Apertur bezeichnen. Durch eine solche Länge L des nichtlinearen Mediums kann gewährleistet werden, dass die Treiberstrahlung nicht an parallel zu dem Propagationspfad verlaufenden Grenzflächen des nichtlinearen Mediums reflektiert werden, sondern dass die Treiberstrahlung stattdessen wieder aus dem nichtlinearen Medium austritt.

Gemäß Ausführungsbeispielen weist das nichtlineare Medium entlang des Propagationspfads eine Länge in einem Bereich von 2 mm bis 60 mm auf. Eine kurze Länge erlaubt es, eine sehr genaue Phasenanpassung zwischen der Eingangsstrahlung, der Treiberstrahlung und der Ausgangsstrahlung über die Länge des Propagationspfads zu erreichen. Hingegen wird durch eine lange Länge ermöglicht, einen Fokus der Treiberstrahlung, der Eingangsstrahlung und der Ausgangsstrahlung weiter entfernt von einer Eintrittsfacette und einer Austrittsfacette des nichtlinearen Mediums zu positionieren, womit eine Leistungsdichte auf der Eintrittsfacette und der Austrittsfacette gering gehalten werden kann. Zudem nimmt auch die Konversionseffizienz mit zunehmender Wechselwirkungslänge bis zu einem Wert zu, bei welchem sich die Phasenlage der drei Felder nachteilig auswirken kann.

Gemäß Ausführungsbeispielen ist die Vorrichtung ausgebildet, um die Treiberstrahlung in dem nichtlinearen Medium zu fokussieren. Dabei beträgt die Rayleigh-Länge des Fokus der Treiberstrahlung in dem nichtlinearen Medium maximal die Rayleigh-Länge eines entsprechenden Gauß-Strahls, das heißt eines Gauß-Strahls derselben Wellenlänge und derselben Querschnittsgröße im Fokus wie die Treiberstrahlung. In anderen Worten, in dem nichtlinearen Medium findet keine Wellenleitung statt.

Gemäß Ausführungsbeispielen ist die Vorrichtung ausgebildet, um die Treiberstrahlung auf einen Fokus in dem nichtlinearen Medium zu fokussieren. Dabei ist die Vorrichtung ausgebildet ist, um die Treiberstrahlung in dem Fokus mit einer Leistungsdichte, beispielsweise eine Leistung pro Fläche des Strahlquerschnitts im Fokus, also beispielsweise eine mittlere Leistungsdichte, gemittelt über die Strahlquerschnittsfläche, von mindestens $2/\pi \cdot 10^5$ W/cm$^2$ oder mindestens $2/\pi \cdot 10^6$ W/cm$^2$ bereitzustellen. Bei einer Leistungsdichte oberhalb dieser Grenze kann eine besonders hohe Effizienz des Konversionsprozesses erreicht werden, insbesondere in der Größenordnung der Quanteneffizienz. Bislang wurde davon ausgegangen, dass die hohe Leistungsdichte, welche für eine Frequenzkonversion ohne Wellenleiterstruktur benötigt wird, der Implementierung ohne Wellenleiterstruktur entgegensteht. Zum einen wurde die benötigte Leistungsdichte als so hoch erachtet, dass mit einer Zerstörung des nichtlinearen Mediums gerechnet wurde. Zum anderen wurde die von der hohen Leistungsdichte verursachte Temperaturerhöhung in dem nichtlinearen Medium als nachteilig für den Konversionsprozess erachtet. Dahingegen wurde erkannt, dass durch eine hohe Leistungsdichte auch ohne Wellenleitung eine hohe Konversionseffizienz erreicht werden kann, und dass dadurch insbesondere in Kombination mit einer langwelligeren Treiberstrahlung im Vergleich zur Eingangsstrahlung einen verbesserten Kompromiss aus Konversionseffizienz und Rauschen erreicht werden kann.

Gemäß Ausführungsbeispielen weist eine Apertur des nichtlinearen Mediums in einer ersten Richtung eine Größe von 0,5 mm bis 10 mm auf. Ferner weist die Apertur in einer zweiten zu der ersten Richtung senkrechten Richtung eine Größe von 0,5 mm bis 10 mm auf. Eine Apertur mit einer Größe von mindestens 0,5 mm gewährleistet eine geringe Leistungsdichte auf einer Eintrittsfacette und/oder einer Austrittsfacette des nichtlinearen Mediums. Eine Apertur von höchstens 10 mm gewährleistet eine kosteneffiziente und platzsparende Implementierung der Vorrichtung.

Gemäß Ausführungsbeispielen weist das nichtlineare Medium entlang des Propagationspfads eine einheitliche elektrische Suszeptibilität zweiter Ordnung auf. Bei periodischen gepolten nichtlinearen Medien kann eine Ungenauigkeit der Periodizität der Polarität des nichtlinearen Mediums zur Erzeugung von Rauschphotonen beitragen. Deshalb lässt sich eine besonders rauscharme Konversion erzielen, wenn das nichtlineare Medium eine einheitliche Polarität entlang des Propagationspfads aufweist.

Gemäß Ausführungsbeispielen weist die elektrische Suszeptibilität zweiter Ordnung des nichtlinearen Mediums ein entlang des Propagationspfads periodisch wechselndes Vorzeichen auf. Durch eine periodisch wechselnde Polarität des nichtlinearen Mediums entlang des Propagationspfads lassen sich die Phasen der Eintrittsstrahlung, der Austrittsstrahlung und der Treiberstrahlung besonders gut aneinander anpassen, insbesondere für eine lange Länge des nichtlinearen Mediums. Eine genaue Phasenanpassung erhöht die Effizienz des Konversionsprozesses, wodurch beispielsweise eine geringere Leistungsdichte ausreichend sein kann.

Gemäß Ausführungsbeispielen verläuft der Propagationspfad zwischen einer Eintrittsfacette und einer Austrittsfacette des nichtlinearen Mediums. Zum Beispiel verläuft der Propagationspfad von der Eintrittsfacette zu der Austrittsfacette des nichtlinearen Mediums. Gemäß diesen Ausführungsbeispielen schließt die Eintrittsfacette mit einer Ebene senkrecht zu dem Propagationspfad einen Winkel in einem Bereich von 0° bis 10° ein. Ferner schließt die Austrittsfacette mit einer Ebene senkrecht zu dem Propagationspfad einen Winkel in einem Bereich von 0 ° bis 10 ° ein. Bei Beispielen ist der Winkel für die Eintrittsfacette und/oder für die Austrittsfacette größer als 0°. Beispielsweise liegen die Winkel der Eintrittsfacette und der Austrittsfacette in einem Bereich von 2 ° bis 10 °. Durch einen Winkel von mehr als 0° lässt sich eine Rückwärtspropagation der Treiberstrahlung verhindern, das heißt, dass elektromagnetische Strahlung, welche entlang des Propagationspfads durch das nichtlineare Medium propagiert und an der Austrittsfacette des nichtlinearen Mediums reflektiert wird, nicht in entgegengesetzter Richtung des Propagationspfads laufen kann.

Gemäß Ausführungsbeispielen ist die Vorrichtung ausgebildet, um die Eingangsstrahlung in dem nichtlinearen Medium mit der Treiberstrahlung so zu überlagern, dass die Eingangsstrahlung und die Treiberstrahlung in ihren Strahlrichtungen übereinstimmen. Durch eine Übereinstimmung der Strahlrichtung kann eine hohe Effizienz des Konversionsprozesses gewährleistet werden.

Gemäß Ausführungsbeispielen liegt die dritte Wellenlänge in einem Bereich von 1260 nm bis 1675 nm. Dabei entspricht die Summe der Reziproken der zweiten und der dritten Wellenlänge dem Reziproken der ersten Wellenlänge. Elektromagnetische Strahlung mit einer Wellenlänge in dem genannten Bereich lässt sich besonders verlustarm mittels Wellenleitern übertragen, so dass sich diese Wellenlängenbereiche gut für eine Kommunikation über längere Strecken eignen.

Gemäß Ausführungsbeispielen weist die Vorrichtung einen weiteren für die zweite Wellenlänge resonanten Resonator auf. In dem weiteren Resonator ist ein weiterer Propagationspfad angeordnet. Der weitere Propagationspfad verläuft durch ein weiteres nichtlineares Medium. Gemäß diesen Ausführungsbeispielen ist die Vorrichtung ausgebildet, um eine weitere elektromagnetische Eingangsstrahlung mit einer weiteren elektromagnetischen Treiberstrahlung der zweiten Wellenlänge entlang des weiteren Propagationspfads zu überlagern, um eine weitere elektromagnetische Ausgangsstrahlung zu erzeugen. Gemäß diesen Ausführungsbeispielen ist die Vorrichtung ausgebildet, um einen aus dem Resonator ausgekoppelten Anteil der Treiberstrahlung zu verwenden, um die weitere Treiberstrahlung in dem weiteren Resonator bereitzustellen. In anderen Worten, die Vorrichtung kann eine Mehrzahl von Frequenzkonverter-Modulen aufweisen, welche jeweils ausgebildet sind, um eine jeweilige Eingangsstrahlung in eine jeweilige Ausgangsstrahlung zu konvertieren. Die Verwendung der aus dem Resonator ausgekoppelten Strahlung in dem weiteren Resonator ermöglicht einen energieeffizienten Betrieb einer Mehrzahl von Frequenzkonvertern. Insbesondere wird ein energieeffizienter Betrieb dadurch ermöglicht, dass die Wellenlänge der Treiberstrahlung länger ist als die Wellenlänge der Eingangsstrahlung. Die Intensität der Treiberstrahlung wird bei der Konversion der Eingangsstrahlung in die Ausgangsstrahlung demnach nicht verringert, sondern vielmehr erhöht.

Gemäß Ausführungsbeispielen weist die Vorrichtung ferner einen Verstärker auf, welcher ausgebildet ist, um den aus den Resonator ausgekoppelten Anteil der Treiberstrahlung zu verstärken und um die verstärkte Treiberstrahlung dem weiteren Resonator zuzuführen, so dass die Treiberstrahlung in dem Resonator und die weitere Treiberstrahlung in dem weiteren Resonator die gleiche Intensität aufweisen. Identische Intensitäten in den Resonatoren kann eine identische Effizienz des Konversionsprozesses der jeweiligen nichtlinearen Medien gewährleisten.

Gemäß Ausführungsbeispielen ist das Material des nichtlinearen Mediums eines aus Beta-Bariumborat, beta-$BaB_2O_4$, Lithium Niobat, $LiNbO_3$ oder $MgO:LiNbO_3$, Lithim Tantalat $LiTaO_3$ oder $MgO: LiTa\,O_3$, Kaliumtitanylarsenat, $KTiOAsO_4$, Kaliumtitanylphosphat, $KTiOPO_4$, Lithiumtriborat, $LiB_3O_5$, und Bismuth Triborat, $BiB_3O_6$, ist. Diese Materialien bieten eine hohe Effizienz für Konversionsprozesse zweiter Ordnung.

Gemäß Ausführungsbeispielen liegt die dritte Wellenlänge in einem Bereich von 1260 nm bis 1675 nm, und die erste Wellenlänge in einem Bereich von 200 nm bis zum Halben der dritten Wellenlänge. In diesem Bereich für die erste Wellenlänge lassen sich Emissionswellenlängen von Quantenbits besonders gut realisieren. Insbesondere kann die erste Wellenlänge in einem Bereich von 600 nm bis 650 nm liegen. In letzterem Bereich lassen sich Quantenbits besonders vorteilhaft in Form von Stickstofffehlstellen implementieren. Insbesondere in Kombination mit den genannten Materialien lässt sich eine Konversion in diesen Wellenlängenbereichen vorteilhaft implementieren.

Gemäß Ausführungsbeispielen ist die Vorrichtung ausgebildet ist, um eine Temperatur des nichtlinearen Mediums während des Betriebs bei einer Temperatur T zu halten, wobei T zwischen 0 °C und 200 °C liegt. Ferner ist das Material des nichtlinearen Mediums gemäß diesen Ausführungsbeispielen KTA. Eine erste kristallographische Achse des nichtlinearen Mediums schließt mit dem Propagationspfad einen Winkel $\theta = 90\,°$. Ferner schließt eine Projektion des Propagationspfads in eine von einer zweiten kristallographischen Achse und einer dritten kristallographischen Achse des nichtlinearen Mediums aufgespannten Ebene mit der zweiten kristallographischen Achse einen Winkel $\Phi$ ein. Dabei ist der Brechungsindex entlang der ersten kristallographische Achse größer als der Brechungsindex entlang der zweiten kristallographischen Achse, und der Brechungsindex entlang der zweiten kristallographischen Achse größer als der Brechungsindex entlang der dritten kristallographischen Achse. Ferner liegt die erste Wellenlänge in einem Bereich von 350 nm bis 840 nm und die dritte Wellenlänge in einem Bereich von 1260 nm bis 1675 nm. Die Summe der Reziproken der zweiten und der dritten Wellenlänge entspricht dem Reziproken der ersten Wellenlänge. Ferner ist die zweite Wellenlänge kleiner ist als die dritte Wellenlänge Ferner gilt für den Winkel $\Phi$: $\phi = \phi_0 + \frac{\partial\phi}{\partial\lambda}\Delta\lambda + \frac{\partial\phi}{\partial\lambda}\frac{\partial\lambda}{\partial T}\Delta T$ , mit T = 80°C + $\Delta$T; $\lambda$ = 1064nm + $\Delta\lambda$; $\phi_0$ = 33°$\pm$ 1 °; $\frac{\partial\phi}{\partial\lambda}$ = -0,9 °/nm ± 0,3 °/nm ; und $\frac{\partial\lambda}{\partial T}$ = 0,05 nm/°C ± 0,025 nm/°C .

Die Erfinder haben erkannt, dass sich insbesondere KTA gut zur Frequenzkonversion eignet, da entlang der oben definierten Richtungen eine besonders effiziente Konversion möglich ist, Somit wird eine rauscharme und effiziente Konversion ermöglicht, insbesondere auch für die angegebenen Wellenlängenbereiche für eine Konversion von Wellenlängen stabiler Quantenbits in den Telekom-Wellenlängenbereich. Durch die hohe Effizienz der Konversion ist es möglich, die Leistungsdichte der Treiberstrahlung so gering zu halten, dass das nichtlineare Medium stabil ist und ferner eine rauscharme Konversion möglich ist. Es wurde also erkannt, dass es möglich ist, eine Konversionseffizienz in der Größenordnung der Quanteneffizienz zu erreichen, ohne eine Wellenleiterstruktur zu verwenden, wenn der Propagationspfad in KTA entlang einer bestimmter Orientierung gewählt wird.

Gemäß Ausführungsbeispielen ist die Vorrichtung ausgebildet ist, um eine Temperatur des nichtlinearen Mediums während des Betriebs bei einer Temperatur T zu halten, wobei T zwischen 0 °C und 200 °C liegt. Ferner ist das Material des nichtlinearen Mediums gemäß diesen Ausführungsbeispielen KTA. Eine erste kristallographische Achse des nichtlinearen Mediums schließt mit dem Propagationspfad einen Winkel $\theta = 90\,°$. Ferner schließt eine Projektion des Propagationspfads in eine von einer zweiten kristallographischen Achse und einer dritten kristallographischen Achse des nichtlinearen Mediums aufgespannten Ebene mit der zweiten kristallographischen Achse einen Winkel $\Phi$ ein. Dabei ist der Brechungsindex entlang der ersten kristallographische Achse größer als der Brechungsindex entlang der zweiten kristallographischen Achse, und der Brechungsindex entlang der zweiten kristallographischen Achse größer als der Brechungsindex entlang der dritten kristallographischen Achse. Ferner liegt die erste Wellenlänge in einem Bereich von 600 nm bis 700 nm und die dritte Wellenlänge in einem Bereich von 1260 nm bis 1675 nm. Alternativ dazu liegt die erste Wellenlänge in einem Bereich von 635 nm bis 640 nm und die dritte Wellenlänge in einem Bereich von 1260 nm bis 1675 nm. Alternativ dazu liegt die erste Wellenlänge in einem Bereich von 635 nm bis 640 nm und die dritte Wellenlänge in einem Bereich von 1530 nm bis 1675 nm. In allen dieser Alternativen entspricht die Summe der Reziproken der zweiten und der dritten Wellenlänge dem Reziproken der ersten Wellenlänge. Ferner ist die zweite Wellenlänge kleiner ist als die dritte Wellenlänge Ferner gilt für den Winkel $\Phi$: $\phi = \phi_0 + \frac{\partial\phi}{\partial\lambda}\Delta\lambda + \frac{\partial\phi}{\partial\lambda}\frac{\partial\lambda}{\partial T}\Delta T$, mit T = 80°C + $\Delta$T; $\lambda$ = 1064nm + $\Delta\lambda$; $\phi_0$ = 33°$\pm$ 1

$°$; $\frac{\partial \phi}{\partial \lambda}$ = -0,9 °/nm ± 0,1 °/nm ; und $\frac{\partial \lambda}{\partial T}$ = 0,05 nm/°C ± 0,015 nm/°C . Die erste der Alternativen ist insbesondere für eine Konversion von Wellenlängen von Fehlstellen-Qbits ins Telekom-Frequenzband geeignet. Die zweite der Alternativen ist insbesondere für eine Konversion von Wellenlängen von Stickstofffehlstellen-Qbits ins Telekom-Frequenzband geeignet. Die dritte der Alternativen ist insbesondere für eine Konversion von Wellenlängen von Stickstofffehlstellen-Qbits ins C-, L, oder U-Band mittels eines Nd-Lasers geeignet.

Gemäß Ausführungsbeispielen ist die Vorrichtung ausgebildet um Einzelphotonen der Eingangsstrahlung quanteninformationserhaltend in Photonen der Ausgangsstrahlung zu konvertieren. Zum Beispiel beträgt die Rate an Rauschphotonen, also Photonen der dritten Wellenlänge welche nicht aus einer Konversion eines Photons der Eingangsstrahlung in einer Drei-Wellenmischung hervorgehen, normiert auf die Konversionseffizienz von Eingangsstrahlung zu Ausgangsstrahlung und auf die Bandbreite der Ausgangsstrahlung höchstens 6,12 Hz/pm/%.

Weitere Ausführungsbeispiele der vorliegenden Erfindung schaffen ein Verfahren zur Frequenzkonversion elektromagnetischer Strahlung. Das Verfahren beinhaltet ein Überlagern einer elektromagnetischen Eingangsstrahlung mit einer ersten Wellenlänge mit einer elektromagnetischen Treiberstrahlung einer zweiten Wellenlänge entlang eines Propagationspfads in einem nichtlinearen Medium, um eine elektromagnetische Ausgangsstrahlung mit einer dritten Wellenlänge zu erzeugen. Dabei ist die zweite Wellenlänge länger als die erste Wellenlänge. Ferner erfolgt das Überlagern in dem nichtlinearen Medium so, dass die Treiberstrahlung in dem nichtlinearen Medium frei propagiert.

Ausführungsbeispiele der Erfindung werden nachfolgend bezugnehmend auf die beigefügten Figuren beschrieben. Es zeigen:

Fig. 1    veranschaulicht eine Vorrichtung zur Frequenzkonversion elektromagnetischer Strahlung gemäß einem Ausführungsbeispiel,

Fig. 2    veranschaulicht einen Strahlengang in dem nichtlinearen Medium gemäß Ausführungsbeispielen,

Fig. 3    veranschaulicht ein Beispiel des nichtlinearen Mediums mit angewinkelten Facetten,

Fig. 4    veranschaulicht ein Beispiel einer Orientierung des Propagationspfads bezüglich kristallographischer Achsen des nichtlinearen Mediums,

Fig. 5    veranschaulicht ein Beispiel des nichtlinearen Mediums mit periodisch wechselnder Polarität,

Fig. 6    veranschaulicht ein Beispiel der Vorrichtung mit Resonator,

Fig. 7    veranschaulicht Beispiele des Resonators,

Fig. 8    veranschaulicht Beispiele für Strahlengänge in dem Resonator,

Fig. 9    veranschaulicht ein Beispiel einer Vorrichtung zur Frequenzkonversion elektromagnetischer Strahlung mit Wiederverwendung der Treiberstrahlung,

Fig. 10    zeigt ein Flussdiagramm eines Verfahrens zur Frequenzkonversion gemäß einem Ausführungsbeispiel.

Im Folgenden werden Ausführungsbeispiele der vorliegenden Erfindung detailliert und unter Verwendung der beigefügten Beschreibungen beschrieben. In der folgenden Beschreibung werden viele Details beschrieben, um eine gründlichere Erklärung von Ausführungsbeispielen der Erfindung zu liefern. Es ist jedoch für Fachleute offensichtlich, dass andere Ausführungsbeispiele ohne diese spezifischen Details implementiert werden können. Merkmale der unterschiedlichen beschriebenen Ausführungsbeispiele können miteinander kombiniert werden, es sei denn, Merkmale einer entsprechenden Kombination schließen sich gegenseitig aus oder eine solche Kombination ist ausdrücklich ausgeschlossen.

Es sei darauf hingewiesen, dass gleiche oder ähnliche Elemente oder Elemente, die die gleiche Funktionalität aufweisen, mit gleichen oder ähnlichen Bezugszeichen versehen sein können oder gleich bezeichnet werden, wobei eine wiederholte Beschreibung von Elementen, die mit dem gleichen oder ähnlichen Bezugszeichen versehen sind oder gleich bezeichnet werden, typischerweise weggelassen wird. Beschreibungen von Elementen, die gleiche oder ähnliche Bezugszeichen aufweisen oder gleich bezeichnet werden, sind gegeneinander austauschbar.

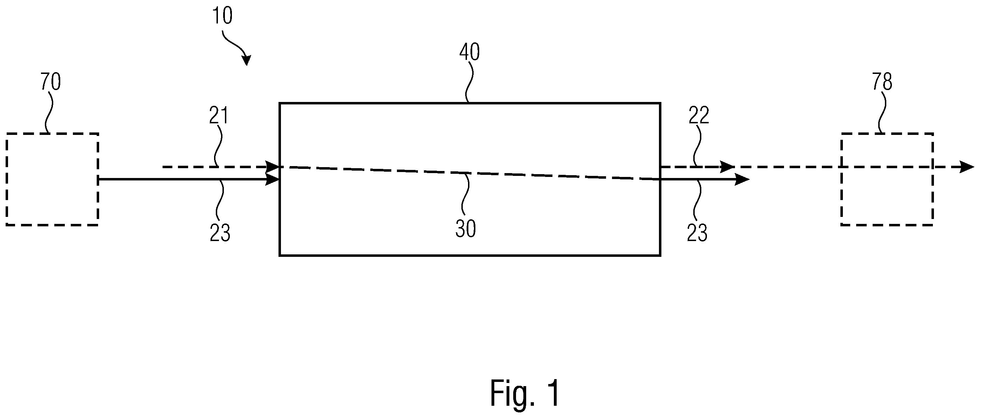

Fig. 1 veranschaulicht eine Vorrichtung 10 zur Frequenzkonversion elektromagnetischer Strahlung gemäß einem Ausführungsbeispiel. Beispielsweise kann die Vorrichtung 10 als Quantenfrequenzkonverter fungieren. Die Vorrichtung 10 weist ein nichtlineares Medium 40 auf. Die Vorrichtung 10 ist ausgebildet, um eine elektromagnetische Eingangsstrahlung 21 in dem nichtlinearen Medium 40 mit einer elektromagnetischen Treiberstrahlung 23 entlang eines Propagationspfads 30 zu überlagern. Beispielsweise kann die Vorrichtung 10 die Treiberstrahlung 23 auf dem Propagationspfad 30 in dem nichtlinearen Medium 40 bereitstellen. Ferner kann die Vorrichtung 10 ausgebildet sein, um die Eingangsstrahlung 21 auf dem Propagationspfad 30 in dem nichtlinearen Medium 40 bereitzustellen. Die Eingangsstrahlung 21 weist eine erste Wellenlänge $\lambda_1$ auf. Die Treiberstrahlung weist eine zweite Wellenlänge $\lambda_2$ auf, welche größer ist als die erste Wellenlänge. Durch die Überlagerung der Eingangsstrahlung 21 und der Treiberstrahlung 23 kann in dem nichtlinearen Medium die Ausgangsstrahlung 22 erzeugt werden. Die Ausgangsstrahlung 22 weist eine dritte Wellenlänge $\lambda_3$ auf. Das nichtlineare Medium 40 ist für eine freie Propagation der Treiberstrahlung 23, und optional auch der Eingangsstrahlung 21 und der Ausgangsstrahlung 22, ausgebildet.

Eine Intensität der Eingangsstrahlung 21 kann geringer sein als eine Intensität der Treiberstrahlung 23. Beispielsweise handelt es sich bei der Eingangsstrahlung 21 um Photonen, welche unter Verwendung von Quantenemittern erzeugt wurden. Es kann sich beispielsweise um Einzelphotonen handeln, d.h. die Eingangsstrahlung kann beispielsweise eine Rate von weniger als 100 000 Hz aufweisen. Eine Leistung der Eingangsstrahlung 21 kann also mindestens um einen Faktor von $10^8$ oder einen Faktor $10^{10}$ geringer sein als eine Leistung der Treiberstrahlung 23.

Zum Beispiel kann die Erzeugung der Ausgangsstrahlung 22 basierend auf der Eingangsstrahlung 21 basierend auf einem nichtlinearen Konversionsprozess, z.B. zweiter Ordnung, insbesondere einer Drei-Wellenmischung, erfolgen. Dementsprechend kann sich eine Relation der Wellenlängen $\lambda_1$, $\lambda_2$ und $\lambda_3$ aus der Energieerhaltung ergeben. Durch die Überlagerung der Eingangsstrahlung 21 mit der Treiberstrahlung 30 kann ein Photon der Eingangsstrahlung 21 mit hoher Wahrscheinlichkeit, also mit einer hohen Konversionseffizienz, in ein Photon der Ausgangsstrahlung 22 konvertiert werden. Dabei kann die Beteiligung eines Photons der Treiberstrahlung 30 die Energieerhaltung in dem Konversionsprozess sicherstellen. Die Wahrscheinlichkeit dieser Drei-Wellenmischung steigt mit zunehmender Dichte von Photonen der Treiberstrahlung 30. Dementsprechend kann die Vorrichtung 10 ausgebildet sein, um die Eingangsstrahlung 21 und die Treiberstrahlung 23 an einem gemeinsamen Punkt auf den Propagationspfad 30 in dem nichtlinearen Medium 40 zu fokussieren. Dazu kann die Vorrichtung 10 beispielsweise fokussierende optische Elemente, beispielsweise Linsen, aufweisen, welche beispielsweise in einem Strahlengang der Treiberstrahlung 23 und der Eingangsstrahlung 21 vor Eintreten in das nichtlineare Medium 40 angeordnet sein können. Entsprechend kann die Vorrichtung 10 im Strahlengang nach dem nichtlinearen Medium optische Elemente zur Kollimation der Treiberstrahlung 23 und der Ausgangsstrahlung 22 aufweisen.

Die erste Wellenlänge kann gemäß Ausführungsbeispielen in einem Bereich von 190 nm bis 1260 nm liegen. Ferner kann die dritte Wellenlänge in einem Bereich von 1260 nm bis 1675 nm liegen. Dabei, aber auch bei anderen Ausführungsbeispielen, kann die Summe der Reziproken der zweiten und der dritten Wellenlänge dem Reziproken der ersten Wellenlänge entsprechen. Die Wellenlänge der Treiberstrahlung 23 kann also so an die erste Wellenlänge $\lambda_1$ und die dritte Wellenlänge $\lambda_3$ angepasst sein, dass die Voraussetzung der Energieerhaltung in dem Konversionsprozess erfüllt ist.

Gemäß einigen Ausführungsbeispielen ist die zweite Wellenlänge kleiner als die dritte Wellenlänge. Gemäß diesen Ausführungsbeispielen ist die zweite Wellenlänge also die mittlere Wellenlänge in dem Prozess der Drei-Wellenmischung aus der Eingangsstrahlung, der Ausgangsstrahlung und der Treiberstrahlung.

Beispiele für Materialien des nichtlinearen Mediums 40 sind Beta-Bariumborat (BBO), beta-$BaB_2O_4$, Lithium-Niobat (LN), $LiNbO_3$ oder $MgO:LiNbO_3$, Lithim Tantalat $LiTaO_3$ oder MgO: $LiTa\,O_3$, Kaliumtitanylarsenat (KTA), $KTiOAsO_4$, Kaliumtitanylphosphat (KTP), $KTiOPO_4$, Lithiumtriborat (LBO), $LiB_3O_5$, und Bismuth-Triborat (BiBO), $BiB_3O_6$.

Gemäß Ausführungsbeispielen, bei welchen das Material des nichtlinearen Mediums eines der genannten ist, liegt die dritte Wellenlänge in einem Bereich von 1260 nm bis 1675 nm. Ferner liegt die erste Wellenlänge in einem Bereich von 200 nm bis zum Halben der dritten Wellenlänge. Das heißt, die erste Wellenlänge ist größer als 350 nm und die zweite Wellenlänge ist kleiner als die dritte Wellenlänge. Bei Ausführungsbeispielen liegt die erste Wellenlänge in einem Bereich von 600 nm bis 650 nm. Insbesondere liegt die erste Wellenlänge vorteilhafterweise oberhalb der kurzwelligen Bandkante des Materials des nichtlinearen Mediums. Diese liegt in KTA, KTP bei 350nm, bei beta-$BaB_2O_4$ bei 185nm, bei $LiTaO_3$ bei 280nm, bei $LiNbO_3$ bei 330 nm, bei BiBO bei 286 nm, und bei LBO bei 160 nm.

Gemäß Ausführungsbeispielen weist das nichtlineare Medium entlang des Propagationspfads eine einheitliche Polarität auf, d.h. beispielsweise eine einheitliche elektrische Suszeptibilität zweiter Ordnung. Das nichtlineare Medium kann beispielsweise eine kontinuierliche Kristallstruktur aufweisen.

Optional kann die Vorrichtung ferner eine Filteranordnung 78 aufweisen, welche in einem Strahlengang der Ausgangsstrahlung 22 angeordnet ist. Die Filteranordnung ist ausgebildet, um die Ausgangsstrahlung 22 zu transmittieren und um die Treiberstrahlung 23 zu unterdrücken. Damit lässt sich die Ausgangsstrahlung von der Treiberstrahlung trennen, um die Ausgangsstrahlung weiter zu verwenden, beispielsweise zu übertragen.

Gemäß Ausführungsbeispielen ist die Filteranordnung ausgebildet, um die Treiberstrahlung mindestens um einen Faktor $10^6$ oder um einen Faktor $10^8$ abzuschwächen. Eine starke Unterdrückung der Treiberstrahlung erlaubt eine rauscharme Bereitstellung der Ausgangsstrahlung.

Optional kann die Vorrichtung ferner eine Polarisationsfilteranordnung aufweisen, welche in einem Strahlengang der Ausgangsstrahlung 22 angeordnet ist, beispielsweise wie in Fig. 1 für die Filteranordnung 78 gezeigt. Die Polarisationsfilteranordnung kann alternativ oder zusätzlich zur Filteranordnung 78 implementiert sein, oder mit dieser kombiniert werden. Die Polarisationsfilteranordnung unterdrückt elektromagnetische Strahlung mit einer Polarisation senkrecht zu einer Polarisationsrichtung der Ausgangsstrahlung.

Beispielsweise kann die Ausgangsstrahlung linear polarisiert sein. Die Polarisationsfilteranordnung kann demnach so angeordnet sein, dass sie elektromagnetische Strahlung mit einer Polarisationsrichtung parallel zu der Polarisationsrichtung der Ausgangsstrahlung transmittiert, und elektromagnetische Strahlung mit einer Polarisationsrichtung senkrecht zu der Polarisationsrichtung der Ausgangsstrahlung unterdrückt. Beispielsweise kann die Polarisationsfilteranordnung in Ausführungsbeispielen implementiert sein, bei welchen das nichtlineare Medium KTA aufweist oder daraus besteht.

Es wurde festgestellt, dass in nichtlinearen Medien, insbesondere in KTA, Konversions- bzw. Emissions-Prozesse auftreten können, welche Rauschphotonen erzeugen, die senkrecht zu der Ausgangsstrahlung polarisiert sind. Durch einen Polarisationsfilter im Strahlengang der Ausgangsstrahlung können diese unterdrückt werden, und somit das Signal-Rausch-Verhältnis der Ausgangsstrahlung verbessert werden.

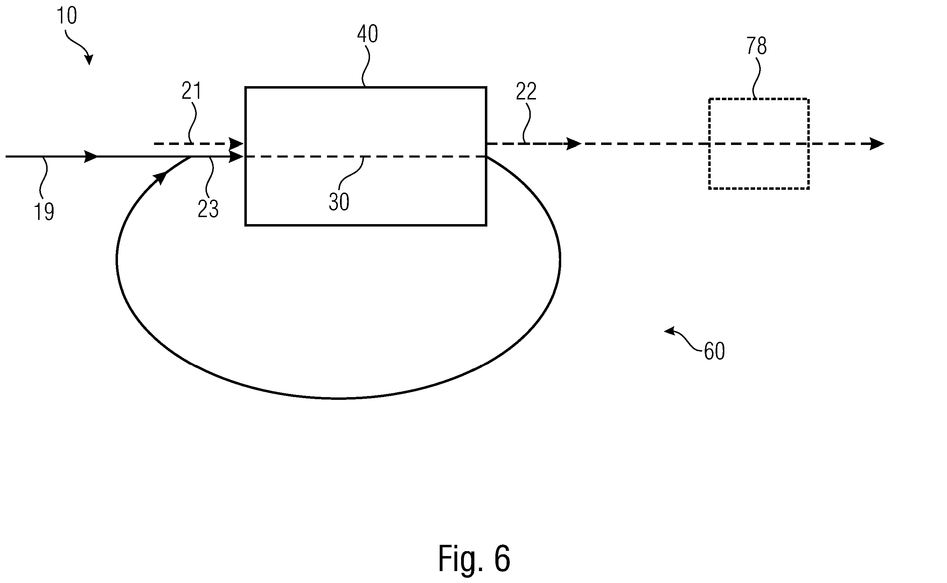

Ferner kann die Vorrichtung 10 optional eine Strahlungsquelle 70, z.B. einen Laser, aufweisen, welche elektromagnetische Strahlung bereitstellt, um die Treiberstrahlung 23 bereitzustellen. Dazu kann die elektromagnetische Strahlung der Strahlungsquelle 70 in einen Resonator eingekoppelt werden, wie im Hinblick auf Fig. 6 beschrieben. Bei alternativen Ausführungsbeispielen kann die Strahlungsquelle 70 die Treiberstrahlung 23 bereitstellen, also in voller Intensität, ohne dass sich der Propagationspfad 30 in dem nichtlinearen Medium 40 in einem Resonator oder einer Kavität befinden muss. In beiden Fällen kann eine Intensität der Treiberstrahlung 23 mit einer hohen Leistung, z.B. mehr als 100 W, mit einer hohen Strahlqualität, z.B. $M^2 < 1.5$, und einer schmalen spektralen Bandbreite, z.B. < 100 MHz, bereitgestellt werden. Die Verwendung eines Resonators erlaubt es die Ausgangsleistung der Strahlungsquelle gering auszulegen, wodurch Kosten gespart werden. In anderen Worten, Die Überhöhung des Resonators reduziert in gleichem Maße die benötigte Laserleistung, und somit den Systempreis. Die Verwendung einer Strahlungsquelle, welche die Treiberstrahlung 23 direkt, ohne externen Resonator, bereitstellt, erlaubt hingegen die Vorrichtung ohne Resonator, und somit einfacher, zu implementieren.

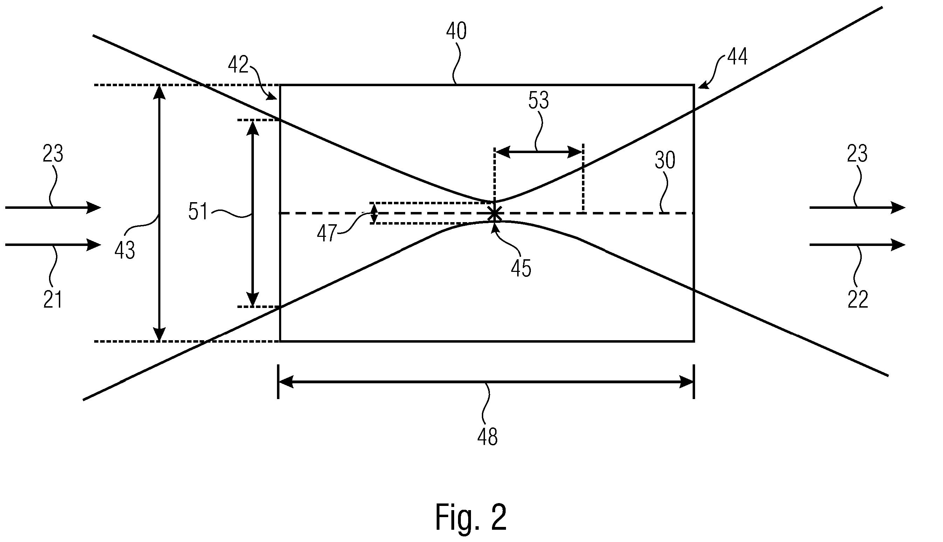

Unter einer freien Propagation kann beispielsweise eine Propagation ohne Wellenleitung verstanden werden. Beispielsweise kann das heißen, dass das nichtlineare Medium keine Wellenleiterstruktur aufweist, und/oder dass das nichtlineare Medium nicht Teil einer solchen ist. Beispiele einer Propagation der Treiberstrahlung 23 in dem nichtlinearen Medium sind im Folgenden Hinblick auf Fig. 2 beschrieben, wobei die darin beschriebenen Eigenschaften der Strahlengänge optional auch auf die Eingangsstrahlung 21 und die Ausgangsstrahlung 22 zutreffen können.

Fig. 2 veranschaulicht einen Strahlengang der Treiberstrahlung 23, der Eingangsstrahlung 21 und der Ausgangsstrahlung 22 gemäß einem Ausführungsbeispiel. Wie in Fig. 2 gezeigt, können die Treiberstrahlung 23 und die Eingangsstrahlung 21 durch eine Eintrittsfacette 42 in das nichtlineare Medium 40 eintreten. Die Treiberstrahlung 23 und die Eingangsstrahlung 21 können auf einen Fokuspunkt 45, welcher eine Position entlang des Propagationspfads 30 bezeichnet, fokussiert sein. Die Treiberstrahlung 23 und die Ausgangsstrahlung 22 können wiederum an einer Austrittsfacette 44 aus dem nichtlinearen Medium 40 austreten. Die Eintrittsfacette 42 kann eine Apertur 43 aufweisen. Diese kann beispielsweise kreisförmig oder oval oder rechteckig sein. Bei Beispielen ist das nichtlineare Medium 40 zylindrisch oder quaderförmig ausgeführt, so dass eine Apertur der Austrittsfacette 44 gleich einer Apertur der Eintrittsfacette 42 ist. Eine Apertur der Austrittsfacette 44 kann bei anderen Beispielen aber auch eine von der Apertur der Eintrittsfacette 42 verschiedene Größe aufweisen. In der folgenden Beschreibung wird von einem kreisförmigen Strahlquerschnitt der Treiberstrahlung 23 und der Eingangsstrahlung 21 ausgegangen, so dass die diskutierten Größenrelationen für alle Raumrichtungen senkrecht zu dem Propagationspfad 30 gelten. Der Strahlquerschnitt ist aber nicht notwendigerweise kreisförmig, sondern kann beispielsweise auch oval sein oder eine andere Form aufweisen. Die diskutierten Größenrelationen gelten dann jeweils für die Betrachtung einer spezifischen Raumrichtung senkrecht zu dem Propagationspfad 30.

Im Fokuspunkt 45 weist die Treiberstrahlung eine Strahlquerschnittsgröße 47 auf, auch mit $2*w_0$ bezeichnet, wobei $w_0$ im Fall eines kreisförmigen Strahlquerschnitts der Radius sein kann. Der Strahlquerschnitt 47 der Treiberstrahlung 23 kann von einem Strahlquerschnitt der Eingangsstrahlung 21 in dem Fokuspunkt 45 verschieden sein, oder mit diesem identisch sein. Je kleiner der Strahlquerschnitt 47, desto höher die Leistungsdichte der Treiberstrahlung 23 in dem Fokuspunkt 45, und desto höher kann die Wahrscheinlichkeit des Konversionsprozesses sein. Wie in Fig. 2 dargestellt kann die Treiberstrahlung 23 nach Durchlaufen des Fokuspunkts 45 divergieren und das nichtlineare Medium durch die Austrittsfacette 44 verlassen.

Demnach findet gemäß Ausführungsbeispielen in dem nichtlinearen Medium 40 eine freie Propagation des Treiberfelds und/oder der Eingangsstrahlung 21 statt. Es findet also keine Wellenleitung statt.

Bei Ausführungsbeispielen erfüllt eine Länge 48 des nichtlinearen Mediums 40 entlang der Richtung des Propagationspfads 30 die folgende Bedingung:

$$L \leq z_R * \sqrt{\frac{1}{3}\left(\frac{D}{w_0}\right)^2 - 4}$$

Dabei bezeichnet $w_0$ den Strahlquerschnitt 47 der Treiberstrahlung 23 und D die Apertur 43 der Eintrittsfacette 42 und/oder der Austrittsfacette 44. Wie aus Fig. 2 ersichtlich ist, stellt eine solche Länge 48 des nichtlinearen Mediums 40 sicher, dass ein Strahldurchmesser 51 an der Eintrittsfacette 42 bzw. der Austrittsfacette 44 so klein ist, dass er die Apertur 43 ungebeugt passieren kann. Frei in dem nichtlinearen Medium propagierende Treiberstrahlung 23 wird also nicht an einer von der Austrittsfacette 44 verschiedenen Grenzfläche des nichtlinearen Mediums 40 reflektiert, so dass keine Wellenleitung stattfindet. Haben die Eintrittsfacette und die Austrittsfacette unterschiedlich große Aperturen, kann die Apertur D sich beispielsweise auf die kleinere Apertur aus einer Eintrittsapertur und einer Austrittsapertur des nichtlinearen Mediums beziehen, oder auf einen Mittelwert der Aperturen der Eintritts- und der Austrittsfacette.

Die Stärke der Fokussierung der Treiberstrahlung 23 auf den Fokuspunkt 45 bzw. die Divergenz der Treiberstrahlung 23 ausgehend vom Fokuspunkt 45, also der Öffnungswinkel der Treiberstrahlung 23 strahlaufwärts und strahlabwärts vom Fokuspunkt gesehen, lässt sich beispielsweise näherungsweise mittels der Rayleigh-Länge 53 beschreiben. Gemäß Ausführungsbeispielen beträgt die Rayleigh-Länge 53 der Treiberstrahlung 23 in dem Fokuspunkt 45 höchstens die Rayleigh-Länge, die ein Gauß-Strahls mit selber Wellenlänge und selbem Strahlquerschnitt 47 im Fokuspunkt 45 wie die Treiberstrahlung 23 hätte. Dies kann vom Fokuspunkt 45 ausgesehen entlang der Strahlrichtung und entgegen der Strahlrichtung gelten.

Gemäß Ausführungsbeispielen beträgt die Länge 48 des nichtlinearen Mediums 40 mindestens 2 mm. Wie aus Fig. 2 ersichtlich ist, vergrößert sich aufgrund der Aufweitung des Strahls ausgehend vom Fokuspunkt 45 der Strahlquerschnitt 51 mit zunehmendem Abstand vom Fokuspunkt 45. Eine größere Länge des nichtlinearen Mediums 40 ermöglicht also einen größeren Strahlquerschnitt 51 auf der Eintrittsfacette 42 und der Austrittsfacette 44. Bei gleichbleibender Leistungsdichte im Fokuspunkt 45 kann durch eine größere Länge 48 also die Leistungsdichte auf der Eintrittsfacette 42 und der Austrittsfacette 44 verringert werden. Die Oberflächen des nichtlinearen Mediums können besonders anfällig für Zerstörung durch hohe Leistungsdichten sein. Durch eine Länge des nichtlinearen Mediums 40 von mindestens 2 mm kann die Leistungsdichte auf der Eintrittsfacette 42 und der Austrittsfacette 44 ausreichend gering gehalten werden.

Beispielsweise beträgt der Durchmesser D der Apertur 43, oder allgemein eine Größe D der Apertur 43, mindestens:

$$D \geq \sqrt{\frac{12\,P}{\pi\,I_D}},$$

wobei P die Leistung des Treiberfeldes und $I_D$ die Zerstörschwelle ist. Mit P = 100 W und den Werten für $I_D$ (nach [25] ist im ns-Puls Regime und im Regime hoher Repraten die Thermik dominant, weshalb die Zerstörschwellen auf das cw-Regime übertragbar angenommen werden), insbesondere kann die Apertur 43 für die im Folgenden genannten Materialien des nichtlinearen Mediums 40 folgendermaßen ausgebildet sein: BBO: D >= 11,5 $\mu$m [26], LBO: D >= 4 $\mu$m [27], KTA und KTP: D >= 9 $\mu$m [28], LN: D >= 18 $\mu$m [29], MgO:LN: D >= 100 $\mu$m [30], LiTa: D >= 13 $\mu$m [29], MgO:LiTa: D >= 260 $\mu$m [31].

Ferner beträgt gemäß Ausführungsbeispielen die Länge 48 des nichtlinearen Mediums 40 höchstens 60 mm. Aufgrund der unterschiedlichen Wellenlängen der Treiberstrahlung, der Eingangsstrahlung und der Ausgangsstrahlung verliert eine Phasenanpassung der Strahlungen mit zunehmender Distanz an Genauigkeit. Eine Länge von unter 60 mm erlaubt eine genaue Phasenanpassung über die Länge des nichtlinearen Mediums.

Gemäß Ausführungsbeispielen beträgt die Apertur 43, beispielsweise zumindest die kleinere der Aperturen der Eintrittsfacette und der Austrittsfacette, zwischen 0,5 mm und 10 mm. Wie schon erwähnt, muss der Strahlquerschnitt nicht zwangsläufig kreisförmig sein. Dementsprechend gilt der genannte Größenbereich für die Apertur bei Beispielen für jede Raumrichtung senkrecht zu dem Propagationspfad 30 unabhängig voneinander. Beispielsweise kann der genannte Größenbereich unabhängig voneinander für beide von zwei Hauptachsen einer ovalen Apertur gelten oder für zwei Kantenlängen einer rechteckigen Apertur.

In anderen Worten, das nichtlineare Medium 40 kann gemäß Ausführungsbeispielen in Längen zwischen 2 mm und 60 mm in sowohl zylindrischer als auch ovaler, insbesondere kreisförmiger, Geometrie ausgeführt sein, wobei für die Kantenlängen der Apertur bzw. die Hauptachsen der Apertur ein Größenbereich von 0,5 mm bis 10 mm vorteilhaft sein kann.

Gemäß Ausführungsbeispielen beträgt eine Leistungsdichte der Treiberstrahlung 23 in dem Fokus 45 mindestens $2/\pi \cdot 10^5$ W/cm², oder mindestens $2/\pi \cdot 10^6$ W/cm². Die Leistungsdichte kann sich dabei beispielsweise auf die zeitlich gemittelte Leistung pro Fläche des Strahlquerschnitts senkrecht zum Propagationspfad 30 in dem Fokuspunkt 45 beziehen. Die Grenzen des Strahlquerschnitts können dabei beispielsweise durch die Linie definiert sein, entlang welcher die Intensität auf $1/e^2$ der Intensität im Strahlzentrum, also auf dem Propagationspfad 30, abgefallen ist. Letzteres kann auch für die vorherigen Betrachtungen gelten.

Gemäß Ausführungsbeispielen ist also der Fokusradius $w_0$ und die Leistung der Treiberstrahlung 23, $P_{drive}$ so gewählt, dass zumindest eine der folgende Bedingung erfüllt ist:

$$P_{drive} > 2 \cdot 10^5 \text{ W/cm}^2 \cdot (w_0^{drive})^2 \text{ oder } P_{drive} > 2 \cdot 10^6 \text{ W/cm}^2 \cdot (w_0^{drive})^2$$

Gemäß Ausführungsbeispielen ist die Vorrichtung 10 ausgebildet, um die Treiberstrahlung 23 im Dauerstrichbetrieb bereitzustellen. Dadurch wird gewährleistet, dass zu jedem Zeitpunkt ein eintreffendes Photon der Eingangsstrahlung 21 in ein Photon der Ausgangsstrahlung 22 konvertiert werden kann.

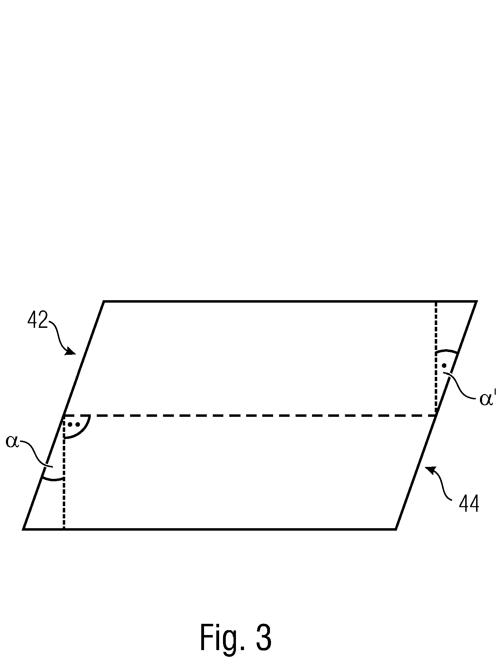

Fig. 3 veranschaulicht ein Ausführungsbeispiel des nichtlinearen Mediums 40. Gemäß dem in Fig. 3 gezeigten Ausführungsbeispiel schließt die Eintrittsfacette 42 des nichtlinearen Mediums 40 mit einer Ebene senkrecht zu dem Propagationspfad 30 einen Winkel $\alpha$ in einem Bereich von 0° bis 10° ein. Ferner schließt die Austrittsfacette 44 des nichtlinearen Mediums 40 mit einer Ebene senkrecht zu dem Propagationspfad 30 einen Winkel $\alpha'$ in einem Bereich von 0° bis 10° ein. Bei Beispielen kann der Betrag des Winkels $\alpha$ mit dem Betrag des Winkels $\alpha'$ übereinstimmen. Die Eintrittsfacette 42 und die Austrittsfacette können in diesem Fall also parallel zueinander stehen. Insbesondere können gemäß Ausführungsbeispielen der Winkel $\alpha$ und der Winkel $\alpha'$ größer als 0° sein. In diesem Fall wird elektromagnetische Strahlung, welche von der Eintrittsfacette 42 bzw. der Austrittsfacette 44 reflektiert wird, so reflektiert, dass diese einen optischen Pfad, auf welchem die Treiberstrahlung 23 propagiert, verlässt.

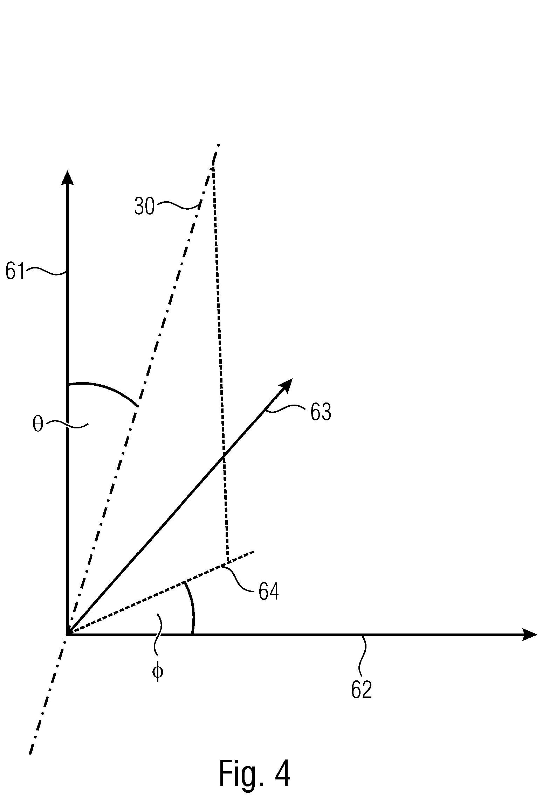

Fig. 4 veranschaulicht eine Orientierung des Propagationspfads 30 bezüglich kristallographischer Achsen des nichtlinearen Mediums gemäß Ausführungsbeispielen. Zum Beispiel weist das nichtlineare Medium 40 ein Material mit einer Kristallstruktur auf oder besteht aus einem Material mit einer Kristallstruktur. Die Kristallstruktur kann mittels kristallographischer Achsen beschrieben werden. Bei dem Material des nichtlinearen Mediums 40 kann es sich um ein optisch anisotropes Medium handeln. Bei Beispielen kann das nichtlineare Medium eine (d.h. genau eine) optische Achse aufweisen. Bei weiteren Beispielen kann das nichtlineare Medium zwei optische Achsen aufweisen. Beispiele für Materialien des nichtlinearen Mediums 40, welche eine optische Achse aufweisen, sind Beta-Bariumborat (BBO), beta-$BaB_2O_4$, Lithium-Niobat (LN), $LiNbO_3$ oder $MgO:LiNbO_3$, und Lithium-Tantalat, $LiTaO_3$ (LT) oder $MgO:LiTaO_3$ (MLT). Beispiele für Materialien des nichtlinearen Mediums 40 mit zwei optischen Achsen für das nichtlineare Medium sind Kaliumtitanylarsenat (KTA), $KTiOAsO_4$, Kaliumtitanylphosphat (KTP), $KTiOPO_4$, Lithiumtriborat (LBO), $LiB_3O_5$, und Bismuth-Triborat (BiBO), $BiB_3O_6$.

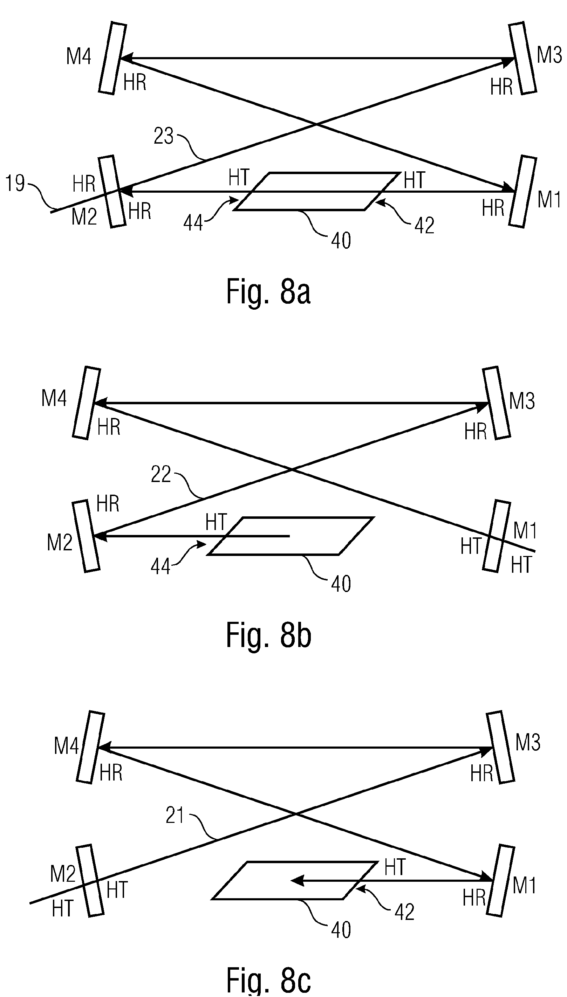

Gemäß Ausführungsbeispielen ist das nichtlineare Medium 40 so ausgebildet, dass der Propagationspfad 30 eine bestimmte Orientierung bezüglich der kristallographischen Achsen des Materials des nichtlinearen Mediums aufweist. Bei diesen bestimmten Orientierungen kann eine hohe Effizienz des Konversionsprozesses erreicht werden, insbesondere eine Effizienz in der Größenordnung der Quanteneffizienz. Aufgrund der besonders hohen Effizienz bei der Verwendung dieser bestimmten Orientierungen kann zudem eine geringere Laserleistung verwendet werden, wodurch eine geringere Zerstörungsgefahr der optischen Komponenten besteht und ein thermischer Energieeintrag in das NLM geringer ausfällt. Dadurch kann beispielsweise die Stabilität der Kavitätsregelung, wie im Hinblick auf Fig. 8 beschrieben, verringert werden.

Gemäß Ausführungsbeispielen, bei welchen das Material des nichtlinearen Mediums 40 eine, das heißt genau eine, optische Achse aufweist, z. B. BBO, LT, MLT oder LN, ist das nichtlineare Medium so ausgebildet, dass die optische Achse mit dem Propagationspfad 30 einen Winkel $\theta$ einschließt. In diesen Fällen stimmt die optische Achse mit einer ersten kristallographischen Achse 61 des nichtlinearen Mediums 40 überein. Die erste kristallographische Achse wird in diesen Materialien beispielsweise als z-Achse oder c-Achse bezeichnet.

Bei Ausführungsbeispielen, bei welchen das Material des nichtlinearen Mediums 40 zwei optische Achsen aufweist, beispielsweise bei Beispielen, in welchen das Material des nichtlinearen Mediums 40 KTA, KTP, LBO oder BiBO ist, ist das nichtlineare Medium 40 so ausgebildet, dass eine erste kristallographische Achse 61 des nichtlinearen Mediums 40 mit dem Propagationspfad 40 einen Winkel $\theta$ einschließt und eine Projektion 64 des Propagationspfads 30 in eine von einer zweiten kristallographischen Achse 62 (z.B. x-Achse) und einer dritten kristallographischen Achse 63 (z.B. y-Achse) aufgespannten Ebene mit der zweiten kristallographischen Achse 62 einen Winkel $\Phi$ einschließt. Der Winkel $\Phi$ kann beispielsweise ausgehend von der zweiten kristallographischen Achse in Richtung der dritten kristallographischen Achse gemessen werden. Die Zuordnung der kristallographischen Achsen des nichtlinearen Mediums 40 zu der ersten, der zweiten und der dritten kristallographischen Achse ist dabei derart, dass der Brechungsindex entlang der ersten kristallographischen Achse 61 (z) größer ist als der Brechungsindex entlang der dritten kristallographischen Achse 63 (y), und der Brechungsindex entlang der dritten kristallographischen Achse größer ist als der Brechungsindex entlang der zweiten kristallographischen Achse 62 (x).

Da der Brechungsindex temperaturabhängig sein kann, kann die Wahl der Winkel $\theta$ und $\Phi$ mit einer Temperatur T des nichtlinearen Mediums 40 während des Betriebs zusammenhängen. Diese kann wiederum von der Leistung des Treiberfelds 23 abhängig sein. Bei Ausführungsbeispielen kann die Vorrichtung 10 ausgebildet sein, um die Temperatur T während des Betriebs bei einer Temperatur T zu halten. Gemäß Ausführungsbeispielen ist die Betriebstemperatur des nichtlinearen Mediums 40 während des Betriebs der Vorrichtung 10 in einem Bereich zwischen 0 °C und 200 °C.

Gemäß Ausführungsbeispielen sind der Winkel θ, der Winkel Φ, die Temperatur T des nichtlinearen Mediums 40 während eines Betriebs der Vorrichtung 10 in Abhängigkeit des Materials des nichtlinearen Mediums 40 so gewählt, dass das folgende Gleichungssystem erfüllt ist. Dabei gilt das erste Gleichungssystem für die Materialien mit einer optischen Achse und das zweite Gleichungssystem für die Materialien mit zwei optischen Achsen. Dabei bezeichnet n den Brechungsindex in Abhängigkeit der angegebenen Parameter.

Gleichungssystem 1:

$$\frac{1}{\lambda_1} = \frac{1}{\lambda_2} + \frac{1}{\lambda_3}$$

$$\frac{n(\lambda_1,\theta,T)}{\lambda_1} = \frac{n(\lambda_2,\theta,T)}{\lambda_2} + \frac{n(\lambda_3,\theta,T)}{\lambda_3},$$

Gleichungssystem 2:

$$\frac{1}{\lambda_1} = \frac{1}{\lambda_2} + \frac{1}{\lambda_3}$$

$$\frac{n(\lambda_1,\theta,\phi,T)}{\lambda_1} = \frac{n(\lambda_2,\theta,\phi,T)}{\lambda_2} + \frac{n(\lambda_3,\theta,\phi,T)}{\lambda_3},$$

Gemäß Ausführungsbeispielen ist der Winkel θ bzw. sind die beiden Winkel θ und Φ wie in Referenz [14] beschrieben, ausgewählt. Ferner sind gemäß diesen Ausführungsbeispielen der Brechungsindex n in Abhängigkeit der Temperatur T den folgenden Referenzen entnommen, um obige Gleichungssysteme zu lösen: für BBO Referenzen [15] und [16]; für LN Referenzen [17] und [18]; für MgO:LiNbO$_3$ Referenz [19]; für KTP Referenzen [20], [21] und [25]; für LBO Referenz [22]; für BiBO Referenz [23]; für KTA, beispielsweise für Werte der ersten Wellenlänge von $\lambda_1$ = 313 nm oder $\lambda_1$ = 422 nm Referenz [24].

Gemäß Ausführungsbeispielen, bei welchen das nichtlineare Medium 40 KTA ist, beträgt der Winkel θ 90° und für den Winkel Φ gilt:

$$\phi = \phi_0 + \frac{\partial\phi}{\partial\lambda}\Delta\lambda + \frac{\partial\phi}{\partial\lambda}\frac{\partial\lambda}{\partial T}\Delta T$$

Dabei gilt T = 80°C + ΔT; λ = 1064nm + Δλ; und $\phi_0$ = 33° ± 1 °. Ferner entspricht die Summe der Reziproken der zweiten und der dritten Wellenlänge dem Reziproken der ersten Wellenlänge, und die zweite Wellenlänge ist kleiner als die dritte Wellenlänge. Gemäß einer ersten Alternative liegt die erste Wellenlänge in einem Bereich von 350 nm bis 840 nm, und die dritte Wellenlänge in einem Bereich von 1260 nm bis 1675 nm. Dabei gilt für die obige Gleichung $\frac{\partial\phi}{\partial\lambda}$ = -0,9 °/nm ± 0,3 °/nm ; und $\frac{\partial\lambda}{\partial T}$ = 0,05 nm/°C ± 0,025 nm/°C . Gemäß einer zweiten Alternative liegt die erste Wellenlänge in einem Bereich von 600 nm bis 700 nm und die dritte Wellenlänge in einem Bereich von 1260 nm bis 1675 nm. Gemäß einer dritten Alternative liegt die erste Wellenlänge in einem Bereich von 635 nm bis 640 nm und die dritte Wellenlänge in einem Bereich von 1260 nm bis 1675 nm. Gemäß einer vierten Alternative liegt die erste Wellenlänge in einem Bereich von 635 nm bis 640 nm und die dritte Wellenlänge in einem Bereich von 1530 nm bis 1675 nm. Für die zweite bis vierte Alternative gilt für obige Gleichung $\frac{\partial\phi}{\partial\lambda}$ = -0,9 °/nm ± 0,1 °/nm und $\frac{\partial\lambda}{\partial T}$ = 0,05 nm/°C ± 0,015 nm/°C .

Gemäß Ausführungsbeispielen entspricht eine Kombination aus der ersten Wellenlänge $\lambda_1$, dem Material des nichtlinearen Mediums 40, dem Winkel θ, im Fall eines nichtlinearen Mediums mit zwei optischen Achsen dem Winkel Φ, und der zweiten Wellenlänge $\lambda_2$ der Treiberstrahlung 23 einer der den Tabellen 1 bis 3 angegebenen Kombinationen. Dabei betrifft Tabelle 1 Ausführungsbeispiele, bei welchen die erste Wellenlänge 313 nm beträgt, die Tabelle 2 Ausführungsbeispiele, bei denen die erste Wellenlänge 422 nm beträgt, und Tabelle 3 Ausführungsbeispiele, bei denen die erste Wellenlänge 637 nm beträgt. Für jede der angegebenen Kombinationen gilt, dass die zweite Wellenlänge eine Wellenlänge aus dem jeweils angegebenen Bereich ist. Beispielsweise kann die zweite Wellenlänge entsprechend einer gewünschten Wellenlänge der Ausgangsstrahlung 22 ausgewählt sein. Bei Beispielen kann die erste Wellenlänge eine aus einem Bereich von +/- 2 nm um den angegebenen Wert sein. Die in den Tabellen 1 bis 3 angegebenen Winkel $\theta$ und $\Phi$ bezeichnen jeweils einen Winkelbereich von +/- 5° um den jeweils angegebenen Wert. Das heißt, der Winkel $\theta$ und der Winkel $\Phi$ können jeweils einen Winkel aus einem Bereich von +/- 5° und den für die Kombination jeweils angegebenen Wert sein.

Gemäß weiteren Ausführungsbeispielen entspricht eine Kombination aus der ersten Wellenlänge, dem Material des nichtlinearen Mediums 40, dem Winkel $\theta$, im Fall eines nichtlinearen Mediums mit zwei optischen Achsen dem Winkel $\Phi$, der zweiten Wellenlänge $\lambda_2$ und zusätzlich der Temperatur T einer in den Tabellen 1 bis 3 angegebenen Kombinationen.

Beispielsweise können die in den Tabellen 1 bis 3 angegebenen Kombinationen dazu verwendet werden, um elektromagnetische Strahlung von Quantenemittern, welche bei der jeweiligen ersten Wellenlänge $\lambda_1$ emittieren, in einen für die Telekommunikation relevanten Spektralbereich zu konvertieren. Beispielsweise emittieren Quantenemittern, welche mittels $^9$Be+ Ionenfallen implementiert sind, vgl. Referenz [8], in einem Spektralbereich um 313 nm. In diesem Fall kann unter Verwendung eines Treiberfelds 23 bei einer Wellenlänge zwischen 388 nm und 423 nm in dem Telekomfrequenzbereich von 1260 nm bis 1675 nm konvertiert werden. Bei alternativen Ausführungsbeispiel beträgt die erste Wellenlänge 422 nm, welche unter Verwendung eines Treiberfelds bei einer Wellenlänge von 570 nm bis 630 nm in den genannten Telekomfrequenzbereich konvertiert werden kann. Bei wieder anderen Ausführungsbeispielen beträgt die erste Wellenlänge 637 nm, beispielsweise bei der Implementierung von Quantenemittern mittels Elektronenspin-Qubits in Stickstofffehlstellenzentren in Diamant, vgl. Referenz [9]. Unter Verwendung eines Treiberfelds 23 bei einer Wellenlänge zwischen 1050 nm und 1275 nm kann diese Wellenlänge in den genannten Telekomfrequenzbereich konvertiert werden.

Tabelle 1: $\lambda_1$ = 313 nm

| NLM | BBO | BiBO | BiBO | BiBO | BiBO | BiBO |
|---|---|---|---|---|---|---|
| | | | | | | |
| $\theta/°$ | 35 | 60 | 70 | 80 | 90 | 140 |
| $\phi/°$ | - | 0 | 0 | 0 | 0 | 90 |
| $T/°C$ | 0 - 200 | 0 - 200 | 0 - 200 | 38 - 200 | 119 - 200 | 0 - 200 |
| $\lambda_2/nm$ | 388 - 423 | 388 - 423 | 388 - 423 | 416 - 423 | 418 - 423 | 388 - 423 |
| NLM | BiBO | LBO | LBO | LBO | LBO | LBO |
| $\theta/°$ | 150 | 5 | 15 | 25 | 35 | 45 |
| $\phi/°$ | 90 | 90 | 90 | 90 | 90 | 90 |
| $T/°C$ | 0 - 180 | 0 - 116 | 0 - 200 | 0 - 200 | 0-6 | 6 - 200 |
| $\lambda_2/nm$ | 388 - 403 | 388 - 399 | 388 - 404 | 389 - 413 | 413 - 423 | 398 - 423 |

| NLM | LBO | LBO | LBO | LBO |
|---|---|---|---|---|
| $\theta/°$ | 55 | 90 | 5 | 15 |
| $\phi/°$ | 90 | 37 | 0 | 0 |
| $T/°C$ | 178 - 200 | 0 - 200 | 0 - 114 | 0-47 |
| $\lambda_2/nm$ | 422 - 423 | 388 - 423 | 388 - 397 | 388 - 391 |

Tabelle 2: $\lambda_1$ = 422

| NLM | BBO | BBO | BiBO | BiBO | BiBO | BiBO | BiBO | BiBO |
|---|---|---|---|---|---|---|---|---|
| $\theta/°$ | 29,9 | 50 | 49,5 | 59,5 | 157,8 | 90 | 90 | 90 |
| $\phi/°$ | - | - | 0 | 0 | 90 | 55 | 65 | 75 |
| $T/°C$ | 0 - 200 | 0 - 200 | 0 - 200 | 0 - 200 | 0 - 200 | 0 - 131 | 0 - 189 | 0 - 200 |
| $\lambda_2/nm$ | 570 - 630 | 570 - 630 | 570 - 630 | 597 - 630 | 570 - 630 | 604 - 630 | 587 - 630 | 577 - 630 |

(fortgesetzt)

| NLM | BiBO | KTA | KTA | KTA | KTA | KTA | KTA | KTA |
|---|---|---|---|---|---|---|---|---|
| $\theta/°$ | 90 | 81,6 | 90 | 90 | 90 | 90 | 90 | 90 |
| $\phi/°$ | 85 | 0 | 0 | 10 | 20 | 30 | 40 | 50 |
| $T/°C$ | 0 - 200 | 0 - 142 | 0 - 156 | 0 - 156 | 0 - 200 | 0 - 200 | 0 - 200 | 0 - 200 |
| $\lambda_2/nm$ | 573 - 622 | 570 - 582 | 570 - 583 | 570 - 585 | 570 - 589 | 574 - 589 | 580 - 600 | 587 - 606 |
| NLM | KTA | KTA | KTA | KTA | KTA | KTA | KTA | KTA |
| $\theta/°$ | 90 | 90 | 90 | 90 | 65 | 75 | 85 | 68,4 |
| $\phi/°$ | 60 | 70 | 80 | 90 | 90 | 90 | 90 | 90 |
| $T/°C$ | 0 - 200 | 0 - 200 | 0 - 200 | 0-195 | 0 - 200 | 0 - 200 | 0 - 200 | 0 - 200 |
| $\lambda_2/nm$ | 595 - 612 | 602 - 616 | 607 - 618 | 610 - 619 | 570 - 601 | 583 - 611 | 603 - 619 | 570 - 598 |
| NLM | KTP | KTP | KTP | KTP | KTP | KTP | KTP | KTP |
| $\theta/°$ | 75 | 85 | 60 | 70 | 90 | 90 | 90 | 90 |
| $\phi/°$ | 0 | 0 | 90 | 90 | 5 | 15 | 25 | 35 |
| $T/°C$ | 0 - 200 | 0 - 200 | 0 - 200 | 0 - 200 | 0 - 200 | 0 - 200 | 0 - 200 | 0 - 200 |
| $\lambda_2/nm$ | 570 - 595 | 592 - 604 | 570 - 608 | 608 - 630 | 601 - 608 | 603 - 614 | 607 - 618 | 615 - 627 |
| NLM | KTP | LBO | LBO | LBO | LBO | LBO | LBO | LBO |
| $\theta/°$ | 90 | 5 | 15 | 25 | 5 | 15 | 25 | 90 |
| $\phi/°$ | 45 | 90 | 90 | 90 | 0 | 0 | 0 | 19 |
| $T/°C$ | 0 - 200 | 129 - 200 | 130 - 200 | 194 - 200 | 0 - 200 | 0 - 200 | 0-75 | 0 - 200 |
| $\lambda_2/nm$ | 625 - 630 | 602 - 630 | 609 - 630 | 629 - 630 | 601 - 630 | 570 - 630 | 570 - 587 | 570 - 630 |

Tabelle 3: $\lambda_1$ = 637 nm

| NLM | BBO | BBO | BiBO | BiBO | BiBO | KTA | KTA | KTA |
|---|---|---|---|---|---|---|---|---|
| $\theta/°$ | 24 | 34 | 5 | 40 | 50,4 | 90 | 90 | 90 |
| $\phi/°$ | - | - | 0 | 0 | 0 | 5 | 15 | 25 |
| $T/°C$ | 0 - 200 | 0 - 200 | 0 - 200 | 0 - 200 | 0 - 200 | 0 - 200 | 0 - 200 | 0 - 200 |
| $\lambda_2/nm$ | 1050 - 1275 | 1050 - 1275 | 1050 - 1275 | 1050 - 1275 | 1050 - 1275 | 1080 - 1097 | 1072 - 1093 | 1061 - 1084 |
| NLM | KTA | KTA | KTA | KTA | KTA | KTA | KTA | KTA |
| $\theta/°$ | 90 | 90 | 55 | 65 | 75 | 85 | 50 | 60 |
| $\phi/°$ | 35 | 45 | 0 | 0 | 0 | 0 | 90 | 90 |
| $T/°C$ | 0 - 200 | 0 - 200 | 0 - 200 | 0 - 200 | 0 - 200 | 0 - 200 | 0 - 200 | 0 - 200 |
| $\lambda_2/nm$ | 1050 - 1070 | 1034 - 1054 | 1060 - 1160 | 1143 - 1287 | 1113 - 1233 | 1073 - 1115 | 1038 - 1202 | 1143 - 1275 |
| NLM | KTA | KTP | KTP | KTP | KTP | KTP | KTP | LBO |
| $\theta/°$ | 70 | 57 | 67 | 77 | 48 | 58 | 68 | 5 |
| $\phi/°$ | 90 | 0 | 0 | 0 | 90 | 90 | 90 | 90 |
| $T/°C$ | 0 - 200 | 0 - 200 | 0 - 200 | 0 - 200 | 0 - 200 | 0 - 200 | 0 - 200 | 0 - 200 |
| $\lambda_2/nm$ | 1038 - 1152 | 1050 - 1275 | 1091 - 1275 | 1050 - 1100 | 1050 - 1275 | 1056 - 1244 | 1050 - 1056 | 1137 - 1275 |

(fortgesetzt)

| NLM | LBO | LBO | LBO | LBO | LBO | LBO | LBO | LBO | LBO | LBO |
|---|---|---|---|---|---|---|---|---|---|---|
| $\theta$/° | 15 | 25 | 35 | 45 | 55 | 5 | 15 | | 25 | |
| $\phi$/° | 90 | 90 | 90 | 90 | 90 | 0 | 0 | | 0 | |
| $T$/°C | 0 - 144 | 0 - 200 | 0 - 200 | 0 - 200 | 79 - 200 | 0 - 200 | 0 - 200 | | 0-45 | |
| $\lambda_2$/nm | 1189 - 1275 | 1134 - 1275 | | 1133 - 1237 | | 1050 - 1151 | 1050 - 1085 | 1080 - 1275 | 1050 - 1244 | 1050 - 1079 |

| NLM | LBO | LBO | LBO | LN |
|---|---|---|---|---|
| $\theta$/° | 75 | 85 | 90 | 58 |
| $\phi$/° | 0 | 0 | 5 | - |
| $T$/°C | 152 - 200 | 1 - 167 | 0 - 18 | 0 - 200 |
| $\lambda_2$/nm | 1050 - 1275 | 1050 - 1275 | 1050 - 1275 | 1050 - 1275 |

Alternativ kann der Konversionsprozess außerhalb der angegebenen Winkelbereiche realisiert werden, wodurch ebenfalls eine geringe Rauschrate erreicht werden kann. In diesem Fall kann eine größere Leistung des Treiberfeldes verwendet werden, um eine vergleichbare Konversionseffizienz zu erreichen. Dies kann beispielsweise vorteilhaft mittels Pumprecycling, vgl. beispielsweise Fig. 8, implementiert werden.

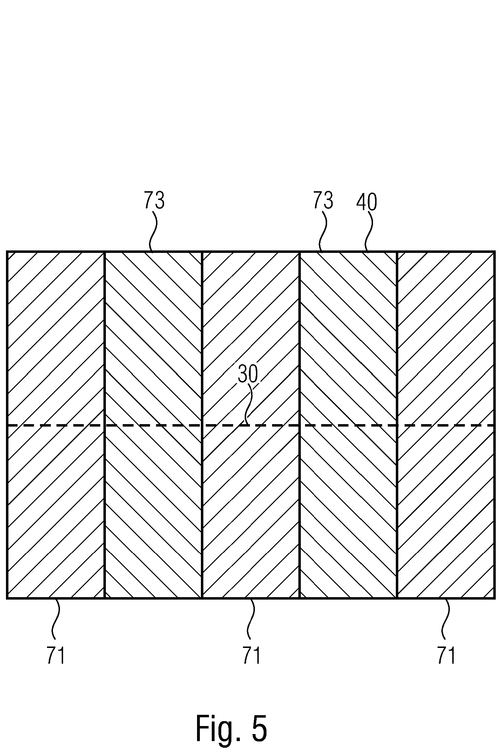

Fig. 5 veranschaulicht ein weiteres Ausführungsbeispiel des nichtlinearen Mediums 40, gemäß welchem die elektrische Suszeptibilität zweiter Ordnung des nichtlinearen Mediums 40 entlang des Propagationspfads 30 ein periodisch wechselndes Vorzeichen aufweist. Gemäß diesen Ausführungsbeispielen weist das NLM 40 also eine periodisch wechselnde Polarität auf. Beispielweise weisen in Fig. 5 erste Bereiche 71 eine erste Polarität auf und zweite Bereiche 73 eine zweite Polarität.

Gemäß Ausführungsbeispielen mit periodisch gepoltem nichtlinearem Medium kann der in Bezug auf Fig. 4 beschriebene Winkel θ 90° betragen. Der Winkel Φ kann dabei bei Beispielen beliebig gewählt sein. In anderen Worten, die Propagation kann in der Richtung stattfinden, in der die effektive Nichtlinearität $d_{eff}$ maximal ist.

Gemäß Ausführungsbeispielen ist eine Kombination aus dem Material des nichtlinearen Mediums 40 und einer Periode γ der periodisch wechselnden Polarität eine der in den Tabellen 4, 5 oder 6 aufgelisteten. Dabei bezieht sich die Tabelle 4 beispielsweise auf einen Wert für die erste Wellenlänge $\lambda_1$ von 422 nm und die Tabelle 5 beispielsweise auf einen Wert für die erste Wellenlänge $\lambda_1$ von 637 nm, sowie die Tabelle 6 beispielsweise auf einen Wert für die erste Wellenlänge $\lambda_1$ von 313 nm.

Tabelle 4

| NLM | KTA | KTP | LN | LT und MLT |
|---|---|---|---|---|
| $\gamma$/μm | 4 bis 5 | 4,8 bis 5,5 | 3 bis 4,5 | 3,9 bis 4,8 |

Tabelle 5

|  | KTA | KTP | LN | LT und MLT |
|---|---|---|---|---|
| $\gamma$/μm | 14,5 bis 15,5 | 15 bis 16,5 | 11,5 bis 12,5 | 12,7 bis 13,9 |

Tabelle 6

| NLM | LT/MLT |
|---|---|
| $\gamma$/μm | 1,4 bis 1,9 |

In anderen Worten, die Frequenzkonversion von Photonen in den für die Telekommunikation relevanten infraroten Spektralbereich von 1260 nm bis 1675 nm kann gemäß Ausführungsbeispielen der vorliegenden Erfindung durch einen nichtlinearen Konversionsprozess zweiter Ordnung (Drei-Wellenmischung) in einem Medium realisiert werden, das keine Wellenleiterstruktur enthält. Dabei können sowohl periodisch gepolte als auch ungepolte (oder einheitlich gepolte) Volumenkristalle, d.h. Kristalle ohne Wellenleiterstruktur, verwendet werden.

Fig. 6 veranschaulicht ein Beispiel der Vorrichtung 10, gemäß welchem die Vorrichtung 10 ferner einen Resonator 60 aufweist, welcher für die zweite Wellenlänge $\lambda_2$ resonant ist. Beispielsweise entspricht die Länge eines optischen Pfads des Resonators 60 einem ganzzahligen Vielfachen der zweiten Wellenlänge. Der Propagationspfad 30 in dem nichtlinearen Medium 40 ist in dem Resonator 60, beispielsweise in einem optischen Pfad des Resonators 60, angeordnet, um die Treiberstrahlung 23 entlang des Propagationspfads 30 bereitzustellen.

Der Propagationspfad 30 kann also Teil eines optischen Pfads des Resonators 60 sein. Beispielsweise ist der Resonator 60 als Ringresonator ausgebildet, in dem Resonator 60 kann eine in den Resonator eingekoppelte Resonatoreingangsstrahlung 19 mehrfach mit sich selbst überlagert werden, so dass die Leistung der Treiberstrahlung 23 in dem Resonator 60 ein Mehrfaches der Leistung der Resonatoreingangsstrahlung 19 betragen kann. In anderen Worten, die Treiberstrahlung, auch Treiberfeld genannt, kann durch die resonante Überhöhung eines leistungsschwächeren Laserstrahls 19 in einer Kavität, also dem Resonator, erzeugt werden. Die Darstellung des Resonators 60 in Fig. 6 ist schematisch zu verstehen. Beispielsweise kann die Resonatoreingangsstrahlung 19 von der Strahlungsquelle 70 bereitgestellt werden.

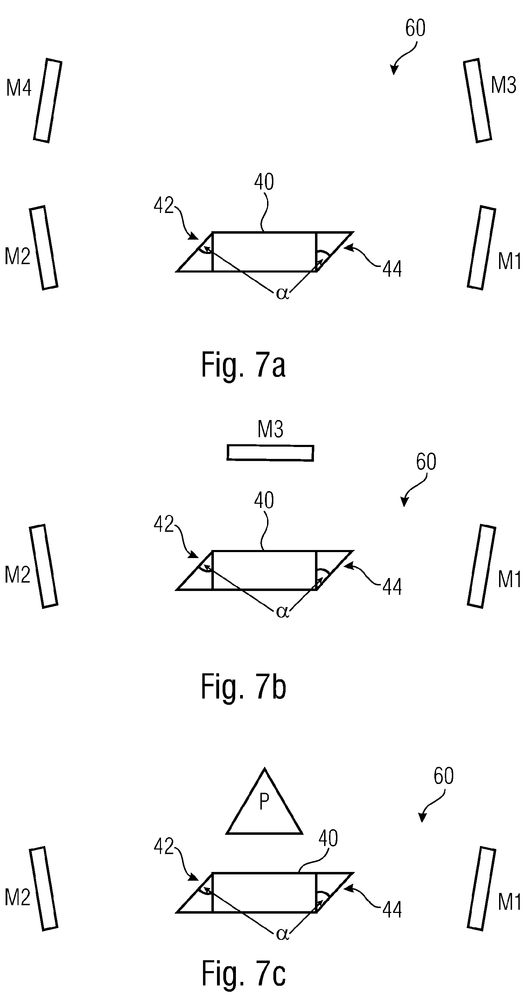

Fig. 7 veranschaulicht Beispiele des Resonators 60, wie sie in Ausführungsbeispielen der Vorrichtung 10 implementiert werden können. Fig. 7a veranschaulicht ein Beispiel des Resonators 60 als Ringresonator mit vier Spiegeln M1-M4. Fig. 7b veranschaulicht ein Beispiel des Resonators 60 als Ringresonator mit drei Spiegeln M1-M3. Fig. 7c veranschaulicht ein Beispiel des Resonators 60 als Ringresonator mit zwei Spiegeln M1 und M2 und Prisma P.

Bei weiteren Ausführungsbeispielen kann der Resonator 60 mittels eines Ringresonators innerhalb des nichtlinearen Mediums 40 realisiert werden. Bei weiteren Ausführungsbeispielen ist der Resonator 60 als Resonator, wie sie in sogenannten "whispering-gallery laser", vgl. Referenz [10], oder nichtpolaren Ringoszillatoren, vgl. Referenz [11], eingesetzt werden, implementiert.

Gemäß Ausführungsbeispielen ist die Resonanzbedingung des Resonators 60 für die Treiberstrahlung 23 erfüllt, nicht aber für die Eingangsstrahlung 21 und die Ausgangsstrahlung 22. Das heißt beispielsweise, dass der Resonator 60 resonant für die Wellenlänge der Treiberstrahlung 23 ist und nicht resonant für die Wellenlängen $\lambda_1$ und $\lambda_3$ der Eingangsstrahlung 21 und der Ausgangsstrahlung 22 ist. Bei Beispielen ist die Resonanzbedingung des Resonators 60 ausschließlich für das Treiberfeld 23 erfüllt.

Gemäß Ausführungsbeispielen sind die Spiegel der in Fig. 7 gezeigten Resonatoren 60 mit mono- oder dichroitischen hochreflektierenden Schichtsystemen beschichtet. Dabei können alle der als Resonatorspiegel fungierenden Optiken, also die Spiegel M1-M4 bzw. M1-M3 bzw. M1, M2 und P, hochreflektierend (HR) für das Treiberfeld 23 ausgebildet sein. Hochreflektierend kann sich dabei auf einen Reflexionskoeffizienten von $R_{HR} > 99\,\%$ beziehen.

Die Eingangsstrahlung 21 kann an einem der Spiegel M# in den optischen Resonators 60 eingekoppelt werden. Je nachdem, an welchem Spiegel dies implementiert wird, wird die Eingangsstrahlung an keinem, einem oder mehreren der als Spiegel fungierenden optischen Elemente M#, P reflektiert, bevor sie in das nichtlineare Medium 40 eintritt. Jede der Optiken, an welcher die Eingangsstrahlung 21 reflektiert wird, bevor sie in das nichtlineare Medium 40 eintritt, kann gemäß Ausführungsbeispielen mit einer HR-Beschichtung für die erste Wellenlänge $\lambda_1$ versehen sein. Der Spiegel, an welchem die Eingangsstrahlung 21 eingekoppelt wird, kann zudem mit einer hochtransmittierenden (HT) Beschichtung versehen sein, z.B. beidseitig. Im hochtransmittierenden Fall kann der Reflexionskoeffizient $R_{HT} < 1\,\%$ für die erste Wellenlänge betragen. Ähnlich dazu kann gemäß Ausführungsbeispielen die Ausgangsstrahlung 22 an einen der Spiegel aus dem optischen Pfad des Resonators 60 ausgekoppelt werden. Dieser Spiegel kann mit einer HT-Beschichtung für die dritte Wellenlänge $\lambda_3$ der Ausgangsstrahlung 22 versehen sein, z.B. beidseitig. Die Ausgangsstrahlung 22 kann vor Austritt aus dem optischen Pfad des Resonators 60 an keinem, einem oder mehreren der als Spiegel fungierenden optischen Elemente reflektiert werden. Diese können mit einer HR-Beschichtung für die dritte Wellenlänge $\lambda_3$ beschichtet sein.

Fig. 8 veranschaulicht Beispiele für die Strahlengänge der Treiberstrahlung 23, der Eingangsstrahlung 21 und der Ausgangsstrahlung 22 für das in Fig. 7a gezeigte Beispiel des Resonators 60 mit vier Spiegeln. Die in Fig. 8 gezeigten Strahlengänge stellen die Ausführungsbeispiele mit Reflexion an der maximal möglichen Anzahl an Spiegeln für diese Implementierung des Resonators 60 dar. Fig. 8a veranschaulicht ein Beispiel eines Strahlengangs der Treiberstrahlung 23. Gemäß diesem Ausführungsbeispiel sind die vier Optiken M1-M4 auf der dem Resonator zugewandten Seite, also der Seite, an welcher der optische Pfad des Resonators 60 reflektiert wird, mit einer HR-Beschichtung beschichtet. Ferner ist eine der Optiken, nämlich Optik M2, an welcher die Resonatoreingangsstrahlung 19 in den Resonator 60 eingekoppelt wird, an der dem Resonator abgewandten Seite HR beschichtet. Ferner können die Eintrittsfacette 42 und die Austrittsfacette 44 des nichtlinearen Mediums 40 HT bzw. AR (Antireflexions-) beschichtet sein. Fig. 8b veranschaulicht ein Beispiel eines Strahlengangs für die Ausgangsstrahlung 22. Gemäß diesem Beispiel wird die Ausgangsstrahlung 22 an der Optik M1 aus dem Resonator 60 ausgekoppelt, nachdem die Ausgangsstrahlung 22 an den Spiegeln M2-M4 reflektiert wurde. Gemäß diesem Beispiel weisen die Optiken M2-M3 an der dem Resonator 60 zugewandten Seite HR-Beschichtungen für die dritte Wellenlänge $\lambda_3$ auf. Ferner weist die Optik M1 eine HT-Beschichtung an der dem Resonator zugewandten Seite und an der dem Resonator abgewandten Seite auf. Alternativ ist auch eine Auskopplung der Ausgangsstrahlung 22 an der Optik M2, der Optik M3 oder der Optik M4 möglich. In diesen Fällen kann die HR-Beschichtung für die dritte Wellenlänge $\lambda_3$ an den Optiken, an welchen die Ausgangsstrahlung 22 nicht reflektiert wird, entfallen. Ferner kann die Austrittsfacette 44 des nichtlinearen Mediums 40 in Strahlrichtung rückseitig für die dritte Wellenlänge HT beschichtet sein. Fig. 8c veranschaulicht ein Beispiel eines Strahlengangs der Eingangsstrahlung 21. Gemäß diesem Beispiel wird die Eingangsstrahlung 21 an der Optik M2 eingekoppelt, welche eine HT-Beschichtung für die erste Wellenlänge an der dem Resonator zugewandten und der dem Resonator abgewandten Seite aufweist. Die Eingangsstrahlung 21 wird in diesem Fall an den Optiken M3, M4 und M1 reflektiert, bevor sie in das nichtlineare Medium 40 eintritt. Die Optiken, an welchen die Eingangsstrahlung 21 reflektiert wird, weisen eine HR-Beschichtung für die erste Wellenlänge $\lambda_1$ auf. Ferner kann die Eintrittsfacette 42 eine HT-Beschichtung für die erste Wellenlänge $\lambda_1$ aufweisen. Bei alternativen Beispielen kann die Einkopplung der Eingangsstrahlung 21 an M3 mit darauffolgender Reflexion an M4 und M1 erfolgen, oder kann die Einkopplung der Eingangsstrahlung 21 an M4 mit darauffolgender Reflexion an M1 erfolgen oder kann die Einkopplung der Eingangsstrahlung 21 an M1 erfolgen. In diesen Fällen entfällt die in Fig. 8c gezeigte HR-Beschichtung auf den Optiken, an denen keine Reflexion stattfindet. Die Optik, an welcher die Einkopplung der Eingangsstrahlung stattfindet, kann beidseitig HT beschichtet sein.

Unabhängig von der konkreten Implementierung des Resonators 60 kann die Vorrichtung ausgebildet sein, um eine optische Weglänge des Resonators 60 auf ein Vielfaches der zweiten Wellenlänge zu regeln.

In anderen Worten, die Vorrichtung 10 kann ausgebildet sein, um die Resonanzbedingung des Resonators 60 für die zweite Wellenlänge aktiv aufrechtzuerhalten. In anderen Worten, um die Resonanzbedingung der Kavität zeitlich aufrechtzuerhalten kann die optische Weglänge über einen Regelkreislauf auf ein ganzzahliges Vielfaches der Wellenlänge der zu überhöhenden Strahlung geregelt werden. Dies kann beispielsweise umgesetzt werden, indem ein Kavitätsspiegel auf einem piezoelektrischen Element befestigt wird. Dies kann beispielsweise einer der Spiegel in Fig. 7 bzw. Fig. 8 sein, vorzugsweise einer welcher nicht auf der resonatorabgewandten Seite HT- beschichtet ist. Alternativ kann ein optisches Element in den Strahlengang eingebracht wird, dessen Brechungsindex durch ein elektrisches Signal moduliert werden kann (z. B. Akusto-optischer Modulator, Pockelszelle, etc.). Zur Erzeugung dieses elektrischen Signals bzw. eines Signals zum Steuern des piezoelektrischen Elements (Regelsignal) kann beispielsweise ein PID-Regler verwendet werden, der ein sog. Fehlersignal in ein Regelsignal umwandelt. Das Fehlersignal kann auf verschiedene Arten erzeugt werden (z. B. Pound-Drever-Hall Verfahren [12], Hänsch-Couillaud Verfahren [13], etc.).

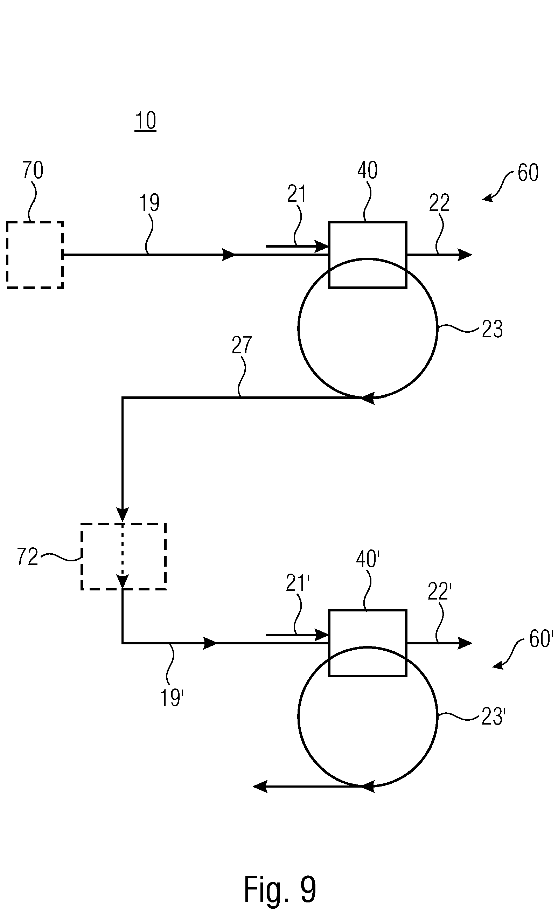

Fig. 9 veranschaulicht ein weiteres Beispiel der Vorrichtung 10. Gemäß diesem Ausführungsbeispiel weist die Vorrichtung 10 ferner einen weiteren Resonator 60' auf. Der weitere Resonator 60' ist ebenfalls für die zweite Wellenlänge $\lambda_2$ der Treiberstrahlung 23 resonant. In dem Resonator 60' ist ein weiterer Propagationspfad eines weiteren nichtlinearen Mediums 40' angeordnet. Gemäß diesem Ausführungsbeispiel ist die Vorrichtung 10 ausgebildet, um eine weitere elektromagnetische Eingangsstrahlung 21' mit einer weiteren elektromagnetischen Treiberstrahlung 23' der Wellenlänge $\lambda_2$ entlang des Propagationspfads des weiteren nichtlinearen Mediums 40' zu überlagern, um eine weitere elektromagnetische Ausgangsstrahlung 22' zu erzeugen. Gemäß diesen Ausführungsbeispielen ist die Vorrichtung 10 ausgebildet, um einen aus dem Resonator 60 ausgekoppelten Anteil 27 der Treiberstrahlung 23 zu verwenden, um die weitere Treiberstrahlung 23' in dem weiteren Resonator 60' bereitzustellen.

Der aus dem Resonator 60 ausgekoppelten Anteil 27 der Treiberstrahlung 23 kann also verwendet werden um eine Resonatoreingangsstrahlung 19' des weiteren Resonators 60' bereitzustellen. Beispielsweise kann die weitere Eingangsstrahlung 21' die erste Wellenlänge $\lambda_1$ der Eingangsstrahlung 23 aufweisen und die weitere Ausgangsstrahlung 22' die Wellenlänge $\lambda_3$ der Ausgangsstrahlung 22 aufweisen. Der Resonator 60 und das NLM 40 können also beispielsweise Teil eines ersten Frequenzkonverter-Moduls sein, und der weitere Resonator 60' und das NLM 40' können Teil eines zweiten Frequenzkonverter-Moduls sein. Die Vorrichtung 10 kann um weitere Frequenzkonverter-Modul erweitert werden, wobei der aus einem der Frequenzkonverter-Module ausgekoppelte Anteil der Treiberstrahlung für ein oder mehrere der anderen Frequenzkonverter-Module verwendet werden kann.

In anderen Worten, die durch die Überhöhungskavität 60 transmittierte Treiberstrahlung 27 kann gemäß Ausführungsbeispielen weiterverwendet werden. Dies kann beispielsweise durch Einbringen eines Optiksystems zur Kollimation und Fokussierung auf eine Lichtleitfaser in den Strahlengang der transmittierten Strahlung 23' implementiert werden. Mittels der Lichtleitfaser kann die transmittierte Strahlung 23' für einen weiteren Konverter bereitgestellt werden, beispielsweise den von dem weiteren nichtlinearen Medium 40' gemäß Fig. 8 gebildeten Konverter. Bei Ausführungsbeispielen weist die Vorrichtung 10 weitere Konverter auf, also weitere nichtlineare Medien 40', in welchen mittels weiterer Resonatoren 60' eine jeweilige Treiberstrahlung bereitgestellt wird. In anderen Worten, die in Fig. 8 gezeigte Anordnung kann kaskadiert werden.

Ein Pumpenrecycling wie in Fig. 8 gezeigt kann insbesondere vorteilhaft in Bezug auf Betriebs- und Herstellungskosten der Vorrichtung 10 sein, insbesondere für eine Mehrzahl von Frequenzkonverter-Modulen.

Gemäß Ausführungsbeispielen weist die Vorrichtung 10 ferner einen Verstärker 72 auf. Der Verstärker 72 ist ausgebildet, um den aus dem Resonator 60 ausgekoppelten Anteil 27 der Treiberstrahlung 23 zu verstärken. Ferner kann die Vorrichtung 10 die verstärkte Treiberstrahlung dem weiteren Resonator 60' zuführen. Beispielsweise kann der Anteil 27 der Treiberstrahlung 23 so verstärkt werden, dass die Treiberstrahlung 23' in dem weiteren Resonator 60' die gleiche Leistung aufweist wie die Treiberstrahlung 23 in dem Resonator 60.

In anderen Worten, die Vorrichtung 10 kann durch einen Nachverstärker 72 ergänzt werden, um eine konstante Eingangsleistung 19 für verschiedene Konverter einer räumlich ausgedehnten Übertragungskette mit mehreren Knoten, beispielsweise Quantenprozessoren, -registern, -repeatern, zu erreichen.

Beispielsweise lässt sich eine effiziente Einkopplung durch die Längenregelung des Resonators auf ein ganzzahliges Vielfaches der zweiten Wellenlänge erreichen. Dadurch wird erreicht, dass durch den HR-Beschichteten Spiegel transmittierte Strahlanteile konstruktiv interferieren, während reflektierte Strahlanteile destruktiv interferieren. Bei perfekter Regelung (und Einfrequenzstrahlung) tritt 100% der einfallenden Strahlung durch den HR-Spiegel in den Resonator. Dies ist unabhängig von der Reflektivität. Die erreichte Überhöhung im Resonator 60 ergibt sich dann daraus, wie oft die Strahlung im Resonator mit "sich selbst" überlagert wird. Je höher die Reflektivitäten der Spiegel (bzw. je geringer die Verluste, die die Strahlung bei einem Resonatorumlauf erfährt), desto öfter geschieht dies. Der Zusammenhang ist dabei (ohne weitere Verluste): $I/I\_0 = 1/(1-R\_1*R\_2*R\_3*R\_4)$, wobei $I/I\_0$ die Überhöhung ist und $R\_i$ die Reflektivitäten der 4 Resonatorspiegel. Für einen Ringresonator mit HR beschichteten Spiegeln mit $R=99{,}5\%$ ergibt sich bspw. eine Überhöhung von 50.

Zum Beispiel ergibt sich die transmittierte Intensität 23'dann aus dem Transmissionsgrad der jeweiligen Spiegel. Im vorangegangenen Beispiel wird an jedem Spiegel ein Anteil von 0,5% transmittiert. Multipliziert mit der im Resonator zirkulierenden Leistung folgt dann, dass an jedem Spiegel $0{,}5\%*50*I\_0=0{,}25*I\_0$ transmittiert wird. Bei perfekter Regelung und ohne Verluste im Resonator werden also 100% der Intensität der Strahlung 19 in den Resonator und auch wieder aus ihm heraus transmittiert. In Ausführungsbeispielen der vorliegenden Erfindung ist das Pumprecycling insbesondere effizient möglich, da durch den Konversionsprozess keine Verluste des resonanten Strahlungsfeldes entstehen, da ein kurzwelligeres Photon bei der Eingangswellenlänge in ein Photon der Treiberstrahlung und ein Photon der Ausgangswellenlänge konvertiert wird.

Die Resonatoreingangsstrahlung 19 der Vorrichtung 10 gemäß Fig. 6, Fig. 8 oder Fig. 8 kann also bei Beispielen von einer Strahlungsquelle 70 bereitgestellt werden, beispielsweise einem Laser. Alternativ kann die Resonatoreingangsstrahlung 19 von einem Verstärker bereitgestellt werden. Die Resonatoreingangsstrahlung 19 ist vorzugsweise schmalbandig und kann linear polarisiert sein.

Es sei darauf hingewiesen, dass das im Hinblick auf Fig. 9 beschriebene Weiterverwenden der Treiberstrahlung 23, das "Pumpenrecycling", nicht auf Ausführungsbeispiele mit Resonator beschränkt ist, sondern auch bei Ausführungsbeispielen implementiert sein kann, bei welchen die Treiberstrahlung 23 wie im Hinblick auf Fig. 1 beschrieben ohne Anordnung des Propagationspfads 30 in einem Resonator bereitgestellt werden kann. Dazu kann die Treiberstrahlung 23 beispielsweise nach Durchlaufen des nichtlinearen Mediums 40 als Treiberstrahlung 23' bereitgestellt werden, oder optional mittels des Verstärkers 72 verstärkt werden, bevor sie als Treiberstrahlung 23', bereitgestellt wird.

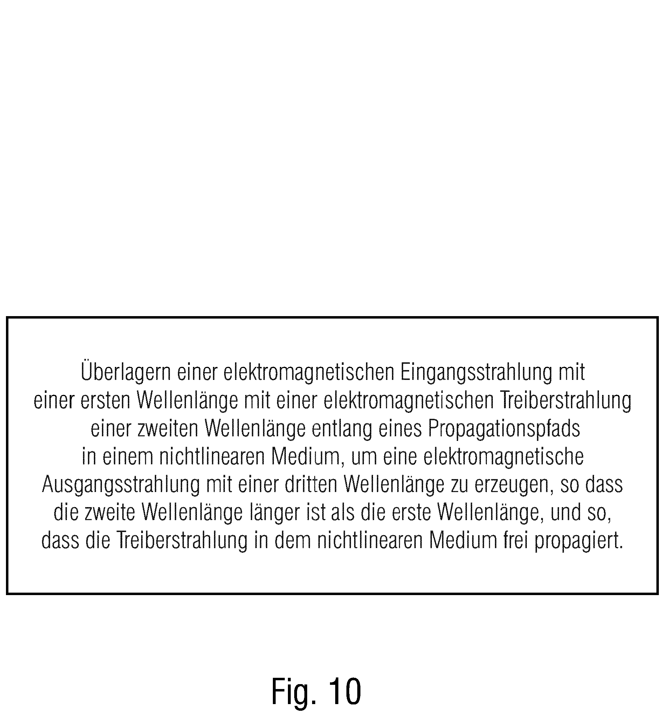

Fig. 10 zeigt ein Flussdiagramm eines Verfahrens 100 gemäß einem Ausführungsbeispiel. Das Verfahren 100 beinhaltet ein Überlagern einer elektromagnetischen Eingangsstrahlung 21 mit einer ersten Wellenlänge $\lambda_1$ mit einer elektromagnetischen Treiberstrahlung 23 mit einer zweiten Wellenlänge $\lambda_2$ entlang eines Propagationspfads 30 in einem nichtlinearen Medium 40, um eine elektromagnetische Ausgangsstrahlung mit einer dritten Wellenlänge $\lambda_3$ zu erzeugen, so dass die zweite Wellenlänge $\lambda_2$ länger ist als die erste Wellenlänge, und so dass eine Leistungsdichte der Treiberstrahlung 23 in einem Fokus 45 der Treiberstrahlung 23 in den nichtlinearen Medium 40 mindestens $2/\pi \cdot 10^5$ W/cm$^2$ oder mindestens $2/\pi \cdot 10^6$ W/cm$^2$ beträgt.

Ausführungsbeispiele der Erfindung können in Laboraufbauten und industriell bei der Datenübertragung von Einzelphotonensignalen angewendet werden. Dies betrifft insbesondere glasfaserbasierte Netzwerke zur "entanglement-distribution" oder "quantumkey-distribution". Neben der Anwendung in einem Knotenpunkt des Netzwerks, bei der durch die Erfindung das Fluoreszenzsignal von Qubits konvertiert wird, kann die Erfindung in sog. "trusted repeaters" eingesetzt werden. Dies sind Repeaterstationen, die mit den Knotenpunkten von Sender und Empfänger verschränkt werden können, um eine abhörsichere Datenübertragung zwischen diesen zu realisieren.

Obwohl einige Aspekte der vorliegenden Erfindung als Merkmale im Zusammenhang mit einer Vorrichtung beschrieben wurden, ist es klar, dass eine solche Beschreibung ebenfalls als eine Beschreibung entsprechender Verfahrensmerkmale betrachtet werden kann. Obwohl einige Aspekte als Merkmale im Zusammenhang mit einem Verfahren beschrieben wurden, ist klar, dass eine solche Beschreibung auch als eine Beschreibung entsprechender Merkmale einer Vorrichtung bzw. der Funktionalität einer Vorrichtung betrachtet werden können.

In der vorhergehenden detaillierten Beschreibung wurden teilweise verschiedene Merkmale in Ausführungsbeispielen zusammen gruppiert, um die Erfindung zu rationalisieren. Diese Art der Erfindung soll nicht als die Absicht interpretiert werden, dass die beanspruchten Ausführungsbeispiele mehr Merkmale aufweisen als ausdrücklich in jedem Anspruch angegeben sind. Vielmehr kann, wie die folgenden Ansprüche wiedergeben, der Gegenstand in weniger als allen Merkmalen eines einzelnen offenbarten Beispiels liegen. Folglich werden die folgenden Ansprüche hiermit in die detaillierte Beschreibung aufgenommen, wobei jeder Anspruch als ein eigenes separates Beispiel stehen kann. Während jeder Anspruch als ein eigenes separates Beispiel stehen kann, sei angemerkt, dass, obwohl sich abhängige Ansprüche in den Ansprüchen auf eine spezifische Kombination mit einem oder mehreren anderen Ansprüchen zurückbeziehen, andere Ausführungsbeispiele auch eine Kombination von abhängigen Ansprüchen mit dem Gegenstand jedes anderen abhängigen Anspruchs oder einer Kombination jedes Merkmals mit anderen abhängigen oder unabhängigen Ansprüchen umfassen. Solche Kombinationen seien umfasst, es sei denn, es ist ausgeführt, dass eine spezifische Kombination nicht beabsichtigt ist. Ferner ist beabsichtigt, dass auch eine Kombination von Merkmalen eines Anspruchs mit jedem anderen unabhängigen Anspruch umfasst ist, selbst wenn dieser Anspruch nicht direkt abhängig von dem unabhängigen Anspruch ist.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Referenzen

[1] A. Dahlberg, M. Skrzypczyk, T. Coopmans, L. Wubben, F. Rozpędek, M. Pompili, A. Stolk, P. Pawełczak, R. Knegjens, J. d. O. Filho, R. Hanson, S. Wehner **2019,** 159.

[2] Y. Yu, F. Ma, X.-Y. Luo, B. Jing, P.-F. Sun, R.-Z. Fang, C.-W. Yang, H. Liu, M.-Y. Zheng, X.-P. Xie, W.-J. Zhang, L.-X. You, Z. Wang, T.-Y. Chen, Q. Zhang, X.-H. Bao, J.-W. Pan, Nature 2020, 578, 240.

[3] R. Ikuta, T. Kobayashi, S. Yasui, S. Miki, T. Yamashita, H. Terai, M. Fujiwara, T. Yamamoto, M. Koashi, M. Sasaki, Z. Wang, N. Imoto, Opt. Express 2014, 22, 11205.

[4] A. Dréau, A. Tcheborateva, A. E. Mahdaoui, C. Bonato, R. Hanson, Phys. Rev. Applied 2018, 9.

[5] P. C. Strassmann, A. Martin, N. Gisin, M. Afzelius, Opt. Express 2019, 27, 14298.

[6] H. Rütz, K.-H. Luo, H. Suche, C. Silberhorn, Appl. Phys. B 2016, 122.

[7] Arlee Smith, SNLO_help, https://www.as-photonics.com/snlo_files/SNLO_help.pdf 2015**.**

[8] S. L. Todaro, V. B. Verma, K. C. McCormick, D. T. C. Allcock, R. P. Mirin, D. J. Wineland, S. W. Nam, A. C. Wilson, D. Leibfried, D. H. Slichter, Physical review letters 2021, 126, 10501.

[9] L. Robledo, L. Childress, H. Bernien, B. Hensen, P. F. A. Alkemade, R. Hanson, Nature 2011, 477, 574.

[10] S. L. McCall, A. F. J. Levi, R. E. Slusher, S. J. Pearton, R. A. Logan.

[11] T. J. Kane, R. L. Byer, Optics letters 1985, 10, 65*.*

[12] R. W. P. Drever, J. L. Hall, F. V. Kowalski, J. Hough, G. M. Ford, A. J. Munley, H. Ward, Appl. Phys. B 1983, 31, 97.

[13] T. W. Hansch, B. Couillaud, Optics Communications 1980, 35, 441.

[14] Dmitriev, Handbook of Nonlinear Optical Crystals (1999).

[15] Kato, IEEE JQE v22 p1013 (1986); red modification by Zhang, Opt Comm, v184 p485 (2000).

[16] Eimerl, J. Appl. Phys. v62 p1968 (1987).

[17] Edwards, Opt. Quant. Electron. v16 p373 (1984).

[18] Jundt, Opt. Lett. v22, p1553 (1997).

[19] Zelmon, JOSA B v14 p3319 (1997).

[20] Vanherzeele, Appl. Opt. v27 p3314(1988).

[21] Wiechmann, Opt. Lett. v18 p1208 (1993).

[22] Kato, IEEE JQE v30 p2950 (1994).

[23] Umemura et al. Opt. Mater. v30 p532 (2007).

[24] Kato, CLEO 2004.

[25] Kato, Appl. Opt. v41 p5040 (2002).

[26] Koechner, W. (1976). Solid state laser engineering. New York: Springer-Verlag

[27] G.C. Bhar, et. al. A comparative study of laser-induced surface damage thresholds in BBO crystals and effect of impurities, Optical Materials, Volume 27, Issue 1, 2004, Pages 119-123, ISSN 0925-3467.

[28] Kan, H., Zhang, S., Zhai, K., Ma, X., Luo, Y., Hu, M., & Wang, Q. (2016). Femtosecond-induced micostructures in Magnesium- doped Lithium Niobate crystals with high repetition rate. Optics Communications, 361, 175-180.

[29] Zverev, G., Levchuk, E., Pashkov, V., Poryadin, Y. (1972). LASER-RADIATION-INDUCED DAMAGE TO THE SURFACE OF LITHIUM NIOBATE AND TANTALATE SINGLE CRYSTALS, Soviet Journal of Quantum Electronics, 2, 167

[30] Pengchao Hu, Lianhan Zhang, Jing Xiong, Jigang Yin, Chengchun Zhao, Xiaoming He, Yin Hang, Optical properties of MgO doped near-stoichiometric LiTaO3 single crystals, Optical Materials, Volume 33, Issue 11, 2011, Pages 1677-1680, ISSN 0925-3467, https://doi.org/10.1016/j.optmat.2011.05.007.

[31] Fang, S., et. al. Growth and optical properties of Mg, Fe Co-doped LiTaO3 crystal. Optik, Volume 117, 2006, Pages 72 - 76.

## Patentansprüche

1. Vorrichtung (10) zur Frequenzkonversion elektromagnetischer Strahlung, wobei die Vorrichtung ein nichtlineares Medium (40) aufweist, wobei die Vorrichtung (10) ausgebildet ist, um eine elektromagnetische Eingangsstrahlung (21) mit einer ersten Wellenlänge ($\lambda_1$) in dem nichtlinearen Medium (40) mit einer elektromagnetischen Treiberstrahlung (23) einer zweiten Wellenlänge ($\lambda_2$) entlang eines Propagationspfads (30) zu überlagern, um eine elektromagnetische Ausgangsstrahlung (22) mit einer dritten Wellenlänge ($\lambda_3$) zu erzeugen,

   wobei die zweite Wellenlänge größer ist als die erste Wellenlänge, und
   wobei das nichtlineare Medium (40) für eine freie Propagation der Treiberstrahlung (23) in dem nichtlinearen Medium (40) ausgebildet ist, **gekennzeichnet dadurch dass** die zweite Wellenlänge kleiner ist als die dritte Wellenlänge.

2. Vorrichtung (10) nach Anspruch 1, wobei eine Leistung der Eingangsstrahlung (21) geringer ist als eine Leistung der Treiberstrahlung (23), insbesondere wobei eine Leistung der Eingangsstrahlung (21) mindestens um einen Faktor $10^8$ geringer ist als eine Leistung der Treiberstrahlung (23).

3. Vorrichtung (10) nach Anspruch 1 oder 2, wobei die Vorrichtung (10) einen für die zweite Wellenlänge resonanten Resonator (60) aufweist, wobei der Propagationspfad (30) des nichtlinearen Mediums (40) in dem Resonator (60) angeordnet ist, um die Treiberstrahlung (23) entlang des Propagationspfads (30) bereitzustellen.

4. Vorrichtung (10) nach einem der vorhergehenden Ansprüche, wobei die Vorrichtung (10) ausgebildet ist, um die Treiberstrahlung (23) in dem nichtlineares Medium (40) auf einen Fokus (45) mit einer Querschnittsgröße (47) von $2*w_0$ zu fokussieren, und wobei eine Länge L des nichtlinearen Mediums (40) entlang des Propagationspfads (30) die Bedingung

$$L \leq z_R * \sqrt{\frac{1}{3}\left(\frac{D}{w_0}\right)^2 - 4}$$

erfüllt, wobei $z_R$ die Rayleigh-Länge für die Treiberstrahlung (23) bezeichnet, und wobei D einen Durchmesser einer Apertur des nichtlinearen Mediums (40) bezeichnet.

5. Vorrichtung (10) nach einem der vorhergehenden Ansprüche, wobei das nichtlineare Medium (40) entlang des Propagationspfads (30) eine Länge in einem Bereich von 2 mm bis 60 mm aufweist.

6. Vorrichtung (10) nach einem der vorhergehenden Ansprüche, wobei das nichtlineare Medium (40) entlang des Propagationspfads (30) eine einheitliche elektrische Suszeptibilität zweiter Ordnung aufweist.

7. Vorrichtung (10) nach einem der Ansprüche 1 bis 5, wobei die elektrische Suszeptibilität zweiter Ordnung des nichtlinearen Mediums (40) ein entlang des Propagationspfads (30) periodisch wechselndes Vorzeichen aufweist.

8. Vorrichtung (10) nach einem der vorhergehenden Ansprüche, wobei eine Eintrittsfacette (42) und eine Austrittsfacette (44) des nichtlinearen Mediums (40), zwischen welchen der Propagationspfad (30) verläuft, mit einer Ebene senkrecht zu dem Propagationspfad (30) jeweils einen Winkel ($\alpha$) in einem Bereich von 2° bis 10° einschließen.

9. Vorrichtung (10) nach einem der vorhergehenden Ansprüche, wobei die dritte Wellenlänge in einem Bereich von 1260 nm bis 1625 nm liegt, wobei die Summe der Reziproken der zweiten und der dritten Wellenlänge dem Reziproken der ersten Wellenlänge entspricht.

10. Vorrichtung (10) nach einem der vorhergehenden Ansprüche, ferner aufweisend:

    einen für die zweite Wellenlänge resonanten Resonator (60), wobei der Propagationspfad (30) des nichtlinearen Mediums (40) in dem Resonator (60) angeordnet ist, um die Treiberstrahlung (23) entlang des Propagationspfads (30) bereitzustellen, und

einen weiteren für die zweite Wellenlänge resonanten Resonator (60'), in welchem ein weiterer Propagationspfad (30') angeordnet ist, welcher durch ein weiteres nichtlinearen Medium (40') verläuft, wobei die Vorrichtung (10) ausgebildet ist, um eine weitere elektromagnetische Eingangsstrahlung (21) mit einer weiteren elektromagnetischen Treiberstrahlung (23') der zweiten Wellenlänge $\lambda_2$ entlang des weiteren Propagationspfads (30') zu überlagern, um eine weitere elektromagnetische Ausgangsstrahlung zu erzeugen,

wobei die Vorrichtung (10) ausgebildet ist, um einen aus dem Resonator (60) ausgekoppelten Anteil der Treiberstrahlung (23) zu verwenden, um die weitere Treiberstrahlung (23') in dem weiteren Resonator (60') bereitzustellen.

11. Vorrichtung (10) nach einem der vorhergehenden Ansprüche, wobei das Material des nichtlinearen Mediums (40) eines aus Beta-Bariumborat, beta-$BaB_2O_4$, Lithium Niobat, $LiNbO_3$ oder $MgO:LiNbO_3$, Kaliumtitanylarsenat, $KTiOAsO_4$, Kaliumtitanylphosphat, $KTiOPO_4$, Lithiumtriborat, $LiB_3O_5$, und Bismuth Triborat, $BiB_3O_6$, ist.

12. Vorrichtung (10) nach einem der vorhergehenden Ansprüche, wobei die Vorrichtung (10) ausgebildet ist, um eine Temperatur des nichtlinearen Mediums (40) während des Betriebs bei einer Temperatur T zu halten, wobei T zwischen 0 °C und 200 °C liegt,

wobei das Material des nichtlinearen Mediums (40), Kaliumtitanylarsenat, $KTiOAsO_4$, ist und wobei eine erste kristallographische Achse des nichtlinearen Mediums (40) mit dem Propagationspfad (30) einen Winkel $\theta = 90°$ einschließt und wobei eine Projektion des Propagationspfads (30) in eine von einer zweiten kristallographischen Achse und einer dritten kristallographischen Achse des nichtlinearen Mediums (40) aufgespannten Ebene mit der zweiten kristallographischen Achse einen Winkel $\Phi$ einschließt, wobei der Brechungsindex entlang der ersten kristallographische Achse größer ist als der Brechungsindex entlang der dritten kristallographischen Achse, und wobei der Brechungsindex entlang der dritten kristallographischen Achse größer ist als der Brechungsindex entlang der zweiten kristallographischen Achse,

wobei die erste Wellenlänge in einem Bereich von 350 nm bis 840 nm liegt, wobei die dritte Wellenlänge in einem Bereich von 1260 nm bis 1675 nm liegt, wobei die Summe der Reziproken der zweiten und der dritten Wellenlänge dem Reziproken der ersten Wellenlänge entspricht, und wobei die zweite Wellenlänge kleiner ist als die dritte Wellenlänge, und wobei gilt:

$$\phi = \phi_0 + \frac{\partial \phi}{\partial \lambda}\Delta\lambda + \frac{\partial \phi}{\partial \lambda}\frac{\partial \lambda}{\partial T}\Delta T$$

mit

$T = 80°C + \Delta T; \lambda = 1064nm + \Delta\lambda; \phi_0 = 33° \pm 1°; \quad \frac{\partial \phi}{\partial \lambda} = -0{,}9 °/nm \pm 0{,}3 °/nm$ ; und

$\frac{\partial \lambda}{\partial T} = 0{,}05 nm/°C \pm 0{,}025 nm/°C$ .

13. Vorrichtung (10) nach einem der vorhergehenden Ansprüche, ferner eine Filteranordnung (78) aufweisend, welche in einem Strahlengang der Ausgangsstrahlung angeordnet ist, wobei die Filteranordnung ausgebildet ist, um die Ausgangsstrahlung zu transmittieren und um die Treiberstrahlung (23) zu unterdrücken, insbesondere wobei die Filteranordnung (78) ausgebildet ist, um die Treiberstrahlung (23) mindestens um einen Faktor $10^6$ oder um einen Faktor $10^8$ abzuschwächen.

14. Vorrichtung (10) nach einem der vorhergehenden Ansprüche, ferner eine Polarisationsfilteranordnung aufweisend, welcher in einem Strahlengang der Ausgangsstrahlung angeordnet ist, wobei die Polarisationsfilteranordnung ausgebildet ist, um elektromagnetische Strahlung mit einer Polarisation senkrecht zu einer Polarisationsrichtung der Ausgangsstrahlung zu unterdrücken.

15. Verfahren (100) zur Frequenzkonversion elektromagnetischer Strahlung, aufweisend:
Überlagern einer elektromagnetischen Eingangsstrahlung (21) mit einer ersten Wellenlänge ($\lambda_1$) mit einer elektromagnetischen Treiberstrahlung (23) einer zweiten Wellenlänge ($\lambda_2$) entlang eines Propagationspfads (30) in einem nichtlinearen Medium (40), um eine elektromagnetische Ausgangsstrahlung mit einer dritten Wellenlänge ($\lambda_3$) zu erzeugen, so dass die zweite Wellenlänge länger ist als die erste Wellenlänge, so dass die zweite Wellenlänge kleiner ist als die dritte Wellenlänge und so, dass die Treiberstrahlung (23) in dem nichtlinearen Medium (40) frei propagiert.

**Claims**

1. A device (10) for frequency conversion of electromagnetic radiation, the device having a non-linear medium (40), the device (10) being configured to superimpose electromagnetic input radiation (21) of a first wavelength ($\lambda_1$) in the non-linear medium (40) with electromagnetic driving radiation (23) of a second wavelength ($\lambda_2$) along a propagation path (30) in order to generate electromagnetic output radiation (22) of a third wavelength ($\lambda_3$),

   wherein the second wavelength is greater than the first wavelength, and
   wherein the non-linear medium (40) is configured for free propagation of the driving radiation (23) in the non-linear medium (40), **characterized in that** the second wavelength is smaller than the third wavelength.

2. The device (10) according to claim 1, wherein a power of the input radiation (21) is lower than a power of the driving radiation (23), in particular wherein a power of the input radiation (21) is lower than a power of the driving radiation (23) by at least a factor $10^8$.

3. The device (10) according to claim 1 or 2, wherein the device (10) comprises a resonator (60) resonant for the second wavelength, wherein the propagation path (30) of the non-linear medium (40) is arranged in the resonator (60) to provide the driving radiation (23) along the propagation path (30).

4. The device (10) according to any one of the preceding claims, wherein the device (10) is configured to focus the driving radiation (23) in the non-linear medium (40) to a focus (45) having a cross-sectional size (47) of $2*w_0$, and wherein a length L of the non-linear medium (40) along the propagation path (30) fulfills the following condition:

$$L \leq z_R * \sqrt{\frac{1}{3}\left(\frac{D}{w_0}\right)^2 - 4}$$

   wherein $z_R$ denotes the Rayleigh length for the driving radiation (23), and wherein D denotes a diameter of an aperture of the non-linear medium (40).

5. The device (10) according to any one of the preceding claims, wherein the non-linear medium (40) has a length along the propagation path (30) in a range from 2 mm to 60 mm.

6. The device (10) according to any one of the preceding claims, wherein the non-linear medium (40) has a uniform second-order electrical susceptibility along the propagation path (30).

7. The device (10) according to any one of claims 1 to 5, wherein the second-order electrical susceptibility of the non-linear medium (40) has a sign periodically changing along the propagation path (30).

8. The device (10) according to any one of the preceding claims, wherein an inlet facet (42) and an outlet facet (44) of the non-linear medium (40), between which the propagation path (30) extends, each enclose an angle ($\alpha$) in a range from 2° to 10° with a plane perpendicular to the propagation path (30).

9. The device (10) according to any one of the preceding claims, wherein the third wavelength is in a range from 1260 nm to 1625 nm, wherein the sum of the reciprocals of the second and third wavelengths corresponds to the reciprocal of the first wavelength.

10. The device (10) according to any one of the preceding claims, further comprising:

    a resonator (60) resonant for the second wavelength, wherein the propagation path (30) of the non-linear medium (40) is arranged in the resonator (60) to provide the driving radiation (23) along the propagation path (30), and
    a further resonator (60') resonant for the second wavelength, in which a further propagation path (30') is arranged which extends through a further non-linear medium (40'), the device (10) being configured to superimpose further electromagnetic input radiation (21) with further electromagnetic driving radiation (23') of the second wavelength

$\lambda_2$ along the further propagation path (30') in order to generate further electromagnetic output radiation, wherein the device (10) is configured to use a portion of the driving radiation (23) coupled out from the resonator (60) to provide the further driving radiation (23') in the further resonator (60').

11. The device (10) according to any one of the preceding claims, wherein the material of the non-linear medium (40) is one of beta barium borate, beta $BaB_2O_4$, lithium niobate, $LiNbO_3$ or $MgO:LiNbO_3$, potassium titanyl arsenate, $KTiOAsO_4$, potassium titanyl phosphate, $KTiOPO_4$, lithium triborate, $LiB_3O_5$, and bismuth triborate, $BiB_3O_6$.

12. The device (10) according to any one of the preceding claims, wherein the device (10) is configured to maintain a temperature of the non-linear medium (40) at a temperature T during operation, wherein T is between 0 °C and 200 °C,

wherein the material of the non-linear medium (40) is potassium titanyl arsenate, $KTiOAsO_4$, and wherein a first crystallographic axis of the non-linear medium (40) encloses an angle $\theta = 90°$ with the propagation path (30) and wherein a projection of the propagation path (30) into a plane spanned by a second crystallographic axis and a third crystallographic axis of the non-linear medium (40) encloses an angle $\Phi$ with the second crystallographic axis, wherein the refractive index along the first crystallographic axis is greater than the refractive index along the third crystallographic axis, and wherein the refractive index along the third crystallographic axis is greater than the refractive index along the second crystallographic axis,
wherein the first wavelength is in a range from 350 nm to 840 nm, wherein the third wavelength is in a range from 1260 nm to 1675 nm, wherein the sum of the reciprocals of the second and third wavelengths corresponds to the reciprocal of the first wavelength, and wherein the second wavelength is smaller than the third wavelength, and wherein the following applies:

$$\phi = \phi_0 + \frac{\partial\phi}{\partial\lambda}\Delta\lambda + \frac{\partial\phi}{\partial\lambda}\frac{\partial\lambda}{\partial T}\Delta T$$

with

$T = 80°C + \Delta T; \quad \lambda = 1064nm + \Delta\lambda; \quad \phi_0 = 33° \pm 1°; \quad \frac{\partial\phi}{\partial\lambda} = -0.9°/nm \pm 0.3°/nm$ ; and

$\frac{\partial\lambda}{\partial T} = 0.05 \text{ nm/°C} \pm 0.025 \text{ nm/°C}$ .

13. The device (10) according to any one of the preceding claims, further comprising a filter arrangement (78) arranged in a beam path of the output radiation, wherein the filter arrangement is configured to transmit the output radiation and to suppress the driving radiation (23), in particular wherein the filter arrangement (78) is configured to attenuate the driving radiation (23) by at least a factor of $10^6$ or by a factor of $10^8$.

14. The device (10) according to any one of the preceding claims, further comprising a polarization filter arrangement arranged in a beam path of the output radiation, wherein the polarization filter arrangement is configured to suppress electromagnetic radiation having a polarization perpendicular to a polarization direction of the output radiation.

15. A method (100) for frequency conversion of electromagnetic radiation, comprising:
superpositioning electromagnetic input radiation (21) of a first wavelength ($\lambda_1$) with electromagnetic driving radiation (23) of a second wavelength ($\lambda_2$) along a propagation path (30) in a non-linear medium (40) to generate electromagnetic output radiation of a third wavelength ($\lambda_3$) such that the second wavelength is longer than the first wavelength, such that the second wavelength is smaller than the third wavelength, and such that the driving radiation (23) propagates freely in the non-linear medium (40).

**Revendications**

1. Dispositif (10) de conversion de fréquence d'un rayonnement électromagnétique, dans lequel le dispositif présente un milieu non linéaire (40), dans lequel le dispositif (10) est conçu pour superposer un rayonnement électromagnétique d'entrée (21) d'une première longueur d'onde ($\lambda_1$) dans le milieu non linéaire (40) avec un rayonnement excitateur électromagnétique (23) d'une deuxième longueur d'onde ($\lambda_2$) le long d'un chemin de propagation (30) afin de produire un rayonnement électromagnétique de sortie (22) d'une troisième longueur d'onde ($\lambda_3$),

dans lequel la deuxième longueur d'onde est supérieure à la première longueur d'onde, et

dans lequel le milieu non linéaire (40) est conçu pour une propagation libre du rayonnement excitateur (23) dans le milieu non linéaire (40), **caractérisé en ce que** la deuxième longueur d'onde est inférieure à la troisième longueur d'onde.

2. Dispositif (10) selon la revendication 1, dans lequel une puissance du rayonnement d'entrée (21) est inférieure à une puissance du rayonnement excitateur (23), en particulier dans lequel une puissance du rayonnement d'entrée (21) est inférieure à une puissance du rayonnement excitateur (23) au moins d'un facteur $10^8$.

3. Dispositif (10) selon la revendication 1 ou 2, dans lequel le dispositif (10) présente un résonateur (60) résonant pour la deuxième longueur d'onde, dans lequel le chemin de propagation (30) du milieu non linéaire (40) est disposé dans le résonateur (60) pour fournir le rayonnement excitateur (23) le long du chemin de propagation (30).

4. Dispositif (10) selon l'une des revendications précédentes, dans lequel le dispositif (10) est conçu pour focaliser le rayonnement excitateur (23) dans le milieu non linéaire (40) sur un foyer (45) avec une taille de section transversale (47) de $2*w_0$ et dans lequel une longueur L du milieu non linéaire (40) le long du chemin de propagation (30) satisfait la condition

$$L \leq z_R * \sqrt{\frac{1}{3}\left(\frac{D}{w_0}\right)^2 - 4}$$
,

dans lequel $z_R$ désigne la longueur de Rayleigh pour le rayonnement excitateur (23) et dans lequel D désigne un diamètre d'une ouverture du milieu non linéaire (40).

5. Dispositif (10) selon l'une des revendications précédentes, dans lequel le milieu non linéaire (40) le long du chemin de propagation (30) présente une longueur comprise dans une plage de 2 mm à 60 mm.

6. Dispositif (10) selon l'une des revendications précédentes, dans lequel le milieu non linéaire (40) le long du chemin de propagation (30) présente une susceptibilité électrique uniforme du second ordre.

7. Dispositif (10) selon l'une des revendications 1 à 5, dans lequel la susceptibilité électrique du second ordre du milieu non linéaire (40) présente un signe changeant périodiquement le long du chemin de propagation (30).

8. Dispositif (10) selon l'une des revendications précédentes, dans lequel une facette d'entrée (42) et une facette de sortie (44) du milieu non linéaire (40), entre lesquelles s'étend le chemin de propagation (30), forment chacune un angle (a) compris dans une plage de 2° à 10° avec un plan perpendiculaire au chemin de propagation (30).

9. Dispositif (10) selon l'une des revendications précédentes, dans lequel la troisième longueur d'onde est comprise dans une plage de 1 260 nm à 1 625 nm, dans lequel la somme des inverses de la deuxième et la troisième longueur d'onde correspond à l'inverse de la première longueur d'onde.

10. Dispositif (10) selon l'une des revendications précédentes, présentant en outre :

un résonateur (60) résonant pour la deuxième longueur d'onde, dans lequel le chemin de propagation (30) du milieu non linéaire (40) est disposé dans le résonateur (60) pour fournir le rayonnement excitateur (23) le long du chemin de propagation (30), et
un autre résonateur (60') résonant pour la deuxième longueur d'onde, dans lequel un autre chemin de propagation (30') est disposé, lequel s'étend à travers un autre milieu non linéaire (40'), dans lequel le dispositif (10) est conçu pour superposer un autre rayonnement électromagnétique d'entrée (21) avec un autre rayonnement excitateur électromagnétique (23') de la deuxième longueur d'onde ($\lambda_2$) le long de l'autre chemin de propagation (30') afin de produire un autre rayonnement électromagnétique de sortie,
dans lequel le dispositif (10) est conçu pour utiliser une partie du rayonnement excitateur (23) couplée hors du résonateur (60) afin de fournir l'autre rayonnement excitateur (23') dans l'autre résonateur (60').

11. Dispositif (10) selon l'une des revendications précédentes, dans lequel le matériau du milieu non linéaire (40) est choisi parmi le bêta-borate de baryum, bêta $BaB_2O_4$, le niobate de lithium, $LiNbO_3$ ou $MgO:LiNbO_3$, l'arséniate de

potassium et de titanyle, KTiOAsO$_4$, le phosphate de potassium et de titanyle, KTiOPO$_4$, le triborate de lithium, LiB$_3$O$_5$ et le triborate de bismuth, BiB$_3$O$_6$.

**12.** Dispositif (10) selon l'une des revendications précédentes, dans lequel le dispositif (10) est conçu pour maintenir la température du milieu non linéaire (40) pendant le fonctionnement à une température T, dans lequel T est compris entre 0 °C et 200 °C,

dans lequel le matériau du milieu non linéaire (40) est l'arséniate de potassium et de titanyle, KTiOAsO$_4$, et dans lequel un premier axe cristallographique du milieu non linéaire (40) forme un angle θ = 90° avec le chemin de propagation (30) et dans lequel une projection du chemin de propagation (30) dans un plan formé par un deuxième axe cristallographique et un troisième axe cristallographique du milieu non linéaire (40) forme un angle Φ avec le deuxième axe cristallographique,
dans lequel l'indice de réfraction le long du premier axe cristallographique est supérieur à l'indice de réfraction le long du troisième axe cristallographique, et dans lequel l'indice de réfraction le long du troisième axe cristallographique est supérieur à l'indice de réfraction le long du deuxième axe cristallographique,
dans lequel la première longueur d'onde est comprise dans une plage de 350 nm à 840 nm, dans lequel la troisième longueur d'onde est comprise dans une plage de 1 260 nm à 1 675 nm, dans lequel la somme des inverses de la deuxième et la troisième longueur d'onde correspond à l'inverse de la première longueur d'onde, et dans lequel la deuxième longueur d'onde est inférieure à la troisième longueur d'onde, et dans lequel on a :

$$\phi = \phi_0 + \frac{\partial\phi}{\partial\lambda}\Delta\lambda + \frac{\partial\phi}{\partial\lambda}\frac{\partial\lambda}{\partial T}\Delta T$$

avec

$T = 80°C + \Delta T$ ; $\lambda = 1\,064$ nm $+ \Delta\lambda$ ; $\Phi_0 = 33° \pm 1$ ; $\frac{\partial\Phi}{\partial\lambda} = -0{,}9\ °/nm \pm 0{,}3\ °/nm$ ; et

$\frac{\partial\lambda}{\partial T} = 0{,}05\ nm/°C \pm 0{,}025\ nm/°C$.

**13.** Dispositif (10) selon l'une des revendications précédentes, présentant en outre un agencement de filtre (78) qui est disposé dans un trajet de faisceau du rayonnement de sortie, dans lequel l'agencement de filtre est conçu pour transmettre le rayonnement de sortie et pour supprimer le rayonnement excitateur (23), en particulier dans lequel l'agencement de filtre (78) est conçu pour atténuer le rayonnement excitateur (23) d'au moins un facteur $10^6$ ou d'un facteur $10^8$.

**14.** Dispositif (10) selon l'une des revendications précédentes, présentant en outre un agencement de filtre de polarisation qui est disposé dans un trajet de faisceau du rayonnement de sortie, dans lequel l'agencement de filtre de polarisation est conçu pour supprimer le rayonnement électromagnétique avec une polarisation perpendiculaire à une direction de polarisation du rayonnement de sortie.

**15.** Procédé (100) de conversion de fréquence d'un rayonnement électromagnétique, présentant :
superposer un rayonnement d'entrée électromagnétique (21) d'une première longueur d'onde ($\lambda_1$) avec un rayonnement excitateur électromagnétique (23) d'une deuxième longueur d'onde ($\lambda_2$) le long d'un chemin de propagation (30) dans un milieu non linéaire (40) afin de produire un rayonnement électromagnétique de sortie d'une troisième longueur d'onde ($\lambda_3$) de telle sorte que la deuxième longueur d'onde soit supérieure à la première longueur d'onde, de telle sorte que la deuxième longueur d'onde soit inférieure à la troisième longueur d'onde, et de telle sorte que le rayonnement excitateur (23) se propage librement dans le milieu non linéaire (40).

Fig. 1

Fig. 2

Fig. 3

Fig. 4

Fig. 5

Fig. 6

**Fig. 7a**

**Fig. 7b**

**Fig. 7c**

Fig. 8a

Fig. 8b

Fig. 8c

Fig. 9

Überlagern einer elektromagnetischen Eingangsstrahlung mit
einer ersten Wellenlänge mit einer elektromagnetischen Treiberstrahlung
einer zweiten Wellenlänge entlang eines Propagationspfads
in einem nichtlinearen Medium, um eine elektromagnetische
Ausgangsstrahlung mit einer dritten Wellenlänge zu erzeugen, so dass
die zweite Wellenlänge länger ist als die erste Wellenlänge, und so,
dass die Treiberstrahlung in dem nichtlinearen Medium frei propagiert.

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019131827 A1

**In der Beschreibung aufgeführte Nicht-Patentliteratur**

- **Y. YU** ; **F. MA** ; **X.-Y. LUO** ; **B. JING** ; **P.-F. SUN** ; **R.-Z. FANG** ; **C.-W. YANG** ; **H. LIU** ; **M.-Y. ZHENG** ; **X.-P. XIE**. *Nature*, 2020, vol. 578, 240
- **R. IKUTA** ; **T. KOBAYASHI** ; **S. YASUI** ; **S. MIKI** ; **T. YAMASHITA** ; **H. TERAI** ; **M. FUJIWARA** ; **T. YAMAMOTO** ; **M. KOASHI** ; **M. SASAKI**. *Opt. Express*, 2014, vol. 22, 11205
- **A. DRÉAU** ; **A. TCHEBORATEVA** ; **A. E. MAHDAOUI** ; **C. BONATO** ; **R. HANSON**. *Phys. Rev. Applied*, 2018, 9
- **P. C. STRASSMANN** ; **A. MARTIN** ; **N. GISIN** ; **M. AFZELIUS**. *Opt. Express*, 2019, vol. 27, 14298
- **H. RÜTZ** ; **K.-H. LUO** ; **H. SUCHE** ; **C. SILBERHORN**. *Appl. Phys. B*, 2016, 122
- **ARLEE SMITH**. *SNLO_help*, 2015, https://www.as-photonics.com/snlo_files/SNLO_help.pdf
- **S. L. TODARO** ; **V. B. VERMA** ; **K. C. MCCORMICK** ; **D. T. C. ALLCOCK** ; **R. P. MIRIN** ; **D. J. WINELAND** ; **S. W. NAM** ; **A. C. WILSON** ; **D. LEIBFRIED** ; **D. H. SLICHTER**. *Physical review letters*, 2021, vol. 126, 10501
- **L. ROBLEDO** ; **L. CHILDRESS** ; **H. BERNIEN** ; **B. HENSEN** ; **P. F. A. ALKEMADE** ; **R. HANSON**. *Nature*, 2011, vol. 477, 574
- **T. J. KANE** ; **R. L. BYER**. *Optics letters*, 1985, vol. 10, 65
- **R. W. P. DREVER** ; **J. L. HALL** ; **F. V. KOWALSKI** ; **J. HOUGH** ; **G. M. FORD** ; **A. J. MUNLEY** ; **H. WARD**. *Appl. Phys. B*, 1983, vol. 31, 97
- **T. W. HANSCH** ; **B. COUILLAUD**. *Optics Communications*, 1980, vol. 35, 441
- **DMITRIEV**. Handbook of Nonlinear Optical Crystals. 1999
- **KATO**. *IEEE JQE*, 1986, vol. 22, 1013
- *Opt Comm*, 2000, vol. 184, 485
- **EIMERL**. *J. Appl. Phys.*, 1987, vol. 62, 1968
- **EDWARDS**. *Opt. Quant. Electron.*, 1984, vol. 16, 373
- **JUNDT**. *Opt. Lett.*, 1997, vol. 22, 1553
- **ZELMON**. *JOSA B*, 1997, vol. 14, 3319
- **VANHERZEELE**. *Appl. Opt.*, 1988, vol. 27, 3314
- **WIECHMANN**. *Opt. Lett.*, 1993, vol. 18, 1208
- **KATO**. *IEEE JQE*, 1994, vol. 30, 2950
- **UMEMURA et al.** *Opt. Mater.*, 2007, vol. 30, 532
- **KATO**. *CLEO*, 2004
- **KATO**. *Appl. Opt.*, 2002, vol. 41, 5040
- **KOECHNER, W.** Solid state laser engineering. Springer-Verlag, 1976
- **G.C. BHAR**. A comparative study of laser-induced surface damage thresholds in BBO crystals and effect of impurities. *Optical Materials*, 2004, vol. 27 (1), ISSN 0925-3467, 119-123
- **KAN, H.** ; **ZHANG, S.** ; **ZHAI, K.** ; **MA, X.** ; **LUO, Y.** ; **HU, M.** ; **WANG, Q.** Femtosecond-induced micostructures in Magnesium- doped Lithium Niobate crystals with high repetition rate. *Optics Communications*, 2016, vol. 361, 175-180
- **ZVEREV, G.** ; **LEVCHUK, E.** ; **PASHKOV, V.** ; **PORYADIN, Y.** LASER-RADIATION-INDUCED DAMAGE TO THE SURFACE OF LITHIUM NIOBATE AND TANTALATE SINGLE CRYSTALS. *Soviet Journal of Quantum Electronics*, 1972, vol. 2, 167
- **PENGCHAO HU** ; **LIANHAN ZHANG** ; **JING XIONG** ; **JIGANG YIN** ; **CHENGCHUN ZHAO** ; **XIAOMING HE** ; **YIN HANG**. Optical properties of MgO doped near-stoichiometric LiTaO3 single crystals. *Optical Materials*, 2011, vol. 33 (11), ISSN 0925-3467, 1677-1680, https://doi.org/10.1016/j.optmat.2011.05.007
- **FANG, S.** Growth and optical properties of Mg, Fe Co-doped LiTaO3 crystal. *Optik*, 2006, vol. 117, 72-76